(19) **Europäisches Patentamt / European Patent Office / Office européen des brevets**

(11) **EP 1 373 422 B1**

(12) **EUROPÄISCHE PATENTSCHRIFT**

(45) Veröffentlichungstag und Bekanntmachung des Hinweises auf die Patenterteilung:
**30.09.2009 Patentblatt 2009/40**

(21) Anmeldenummer: **02757720.4**

(22) Anmeldetag: **21.03.2002**

(51) Int Cl.:
*C09D 175/16* (2006.01)   *C09D 5/02* (2006.01)
*C08G 18/80* (2006.01)   *C08G 18/08* (2006.01)
*C08G 18/78* (2006.01)   *C08G 18/62* (2006.01)

(86) Internationale Anmeldenummer:
**PCT/EP2002/003176**

(87) Internationale Veröffentlichungsnummer:
**WO 2002/079334 (10.10.2002 Gazette 2002/41)**

(54) **THERMISCH UND MIT AKTINISCHER STRAHLUNG HÄRTBARE WÄSSRIGE DISPERSIONEN, VERFAHREN ZU IHRER HERSTELLUNG UND IHRE VERWENDUNG**

AQUEOUS DISPERSIONS, WHICH CAN BE HARDENED THERMALLY AND BY USING ACTINIC RADIATION, METHOD FOR THE PRODUCTION THEREOF AND THEIR USE

DISPERSIONS AQUEUSES DURCISSABLES PAR VOIE THERMIQUE ET PAR RAYONNEMENT ACTINIQUE, PROCEDE PERMETTANT LES PRODUIRE ET LEUR UTILISATION

(84) Benannte Vertragsstaaten:
**AT BE CH CY DE DK ES FI FR GB GR IE IT LI LU MC NL PT SE TR**

(30) Priorität: **29.03.2001 DE 10115505**

(43) Veröffentlichungstag der Anmeldung:
**02.01.2004 Patentblatt 2004/01**

(73) Patentinhaber: **BASF Coatings AG
48165 Münster (DE)**

(72) Erfinder:
• **WILKE, Guido
48151 Münster (DE)**
• **RÖCKRATH, Ulrike
48308 Senden (DE)**

(56) Entgegenhaltungen:
**DE-A- 19 904 317     DE-A- 19 908 013**

**Beschreibung**

Die vorliegende Erfindung betrifft neue, thermisch und mit aktinischer Strahlung härtbare wäßrige Dispersionen, insbesondere Pulverslurries. Außerdem betrifft die vorliegende Erfindung ein neues Verfahren zur Herstellung von thermisch und mit aktinischer Strahlung härtbaren Dispersionen, insbesondere Pulverslurries.

Des weiteren betrifft die vorliegende Erfindung die Verwendung der neuen, thermisch und mit aktinischer Strahlung härtbaren wäßrigen Dispersionen, insbesondere der Pulverslurries, als Beschichtungsstoffe, Klebstoffe und Dichtungsmassen.

Insbesondere betrifft die vorliegende Erfindung die Verwendung der neuen, thermisch und mit aktinischer Strahlung härtbaren wäßrige Dispersionen, insbesondere der Pulverslurries, als Klarlacke und als farb-und/oder effektgebende Beschichtungsstoffe für die Herstellung von Klarlackierungen, ein- oder mehrschichtigen farb- und/oder effektgebenden Beschichtungen und Kombinationseffektschichten auf den Gebieten der Kraftfahrzeugerstlackierung, Kraftfahrzeugreparaturlackierung, der industriellen Lackierung, inklusive Coil Coating, Container Coating und Beschichtung oder Imprägnierung von elektrotechnischen Bauteilen, der Lackierung von Möbeln, Fenstern, Türen und Bauwerken im Innen- und Außenbereich.

Unter aktinischer Strahlung ist hier und im folgenden elektromagnetische Strahlung wie nahes Infrarot, sichtbares Licht, UV-Strahlung oder Röntgenstrahlung, insbesondere UV- Strahlung, und Korpuskularstrahlung wie Elektronenstrahlung zu verstehen.

Die kombinierte Härtung durch Hitze und aktinische Strahlung wird von der Fachwelt auch als Dual-Cure bezeichnet. Demgemäß werden hier und im folgenden die in Rede stehenden neuen Pulverslurries, Beschichtungsstoffe, Klebstoffe und Dichtungsmassen als Dual-Cure-Pulverslurries, -Beschichtungsstoffe, -Klebstoffe und -Dichtungsmassen bezeichnet.

Hier und im folgenden ist unter einer Kombinationseffektschicht eine Lackierung zu verstehen, die in einer farb- und/oder effektgebenden Beschichtung mindestens zwei Funktionen erfüllt. Funktionen dieser Art sind insbesondere der Schutz vor Korrosion, die Haftvermittlung, die Absorption mechanischer Energie und die Farb- und/oder Effektgebung. Vor allem dient die Kombinationseffektschicht der Absorption mechanischer Energie sowie der Farb- und/oder Effektgebung zugleich; sie erfüllt also die Funktionen einer Füllerlackierung oder Steinschlagschutzgrundierung und einer Basislackierung. Vorzugsweise hat die Kombinationseffektschicht darüber hinaus noch Korrosionsschutzwirkung und/ oder haftvermittelnde Wirkung (vgl. Römpp Lexikon Lacke und Druckfarben, Georg Thieme Verlag, Stuttgart, New York, 1998, Seiten 49 und 51, »Automobillacke«).

Dual-Cure-Beschichtungsstoffe sind aus der deutschen Patentanmeldung DE 198 18 735 A1 bekannt. Die Dual-Cure-Gemische enthalten zwingend Bestandteile, wie z. B. (Meth)Acrylatcopolymerisate, die neben isocyanatreaktiven funktionellen Gruppen obligatorisch (Meth)Acryloylgruppen aufweisen, und Bestandteile, wie z. B. (Meth)Acrylatcopolymerisate, die neben komplementären freien Isocyanatgruppen ebenfalls obligatorisch (Meth)Acryloylgruppen aufweisen. Außerdem können sie (Meth)Acrylatcopolymerisate enthalten, die frei von (Meth)Acryloylgruppen sind, indes isocyanatreaktive Gruppen aufweisen. Darüber hinaus beschreibt die deutsche Patentanmeldung eine Vielzahl von Alternativen zu diesen Komponenten, die allesamt als gleichwirkend dargestellt werden. So können beispielsweise anstelle der (Meth)Acrylatcopolymerisate, die neben isocyanatreaktiven funktionellen Gruppen obligatorisch (Meth)Acryloylgruppen aufweisen, die analogen Urethan(meth)acrylate verwendet werden. Außerdem wird nicht angegeben, welche Glasübergangstemperaturen Tg die (Meth)Acrylatcopolymerisate, die frei von (Meth)Acryloylgruppen sind, haben sollen.

Die bekannten Dual-Cure-Beschichtungsstoffe können auf wäßriger oder lösemittelhaltiger Basis bestehen. Handelt es sich um wäßrige Dual-Cure-Beschichtungsstoffe, müssen Maßnahmen getroffen werden, um die Wasserverdünnbarkeit der Bindemittel zu gewährleisten. Bevorzugt werden zur Erzielung einer ausreichenden Wasserverdünnbarkeit Emulgatoren; besonders-bevorzugt nichtionische Emulgatoren, eingesetzt. Dual-Cure-Pulverslurries werden jedoch nicht beschrieben.

Es wird zwar angegeben, daß die bekannten Dual-Cure-Beschichtungsstoffe Beschichtungen mit sehr guter Chemikalien-, Benzin-und Lösemittelbeständigkeit, hoher Kratzfestigkeit sowie guter und rascher Schleifbarkeit ergeben und in dieser Hinsicht den Anforderungen an eine Mehrschichtlackierung auf dem Gebiet der Fahrzeuglackierung, insbesondere der Fahrzeugreparaturlackierung, genügen sollen. Darüber hinaus sollen die Beschichtungen frei von Rißbildungen sein und eine gute Haftung zum Untergrund aufweisen. Insgesamt sollen sie ein einwandfreies optisches Aussehen zeigen. Wie jedoch dieses Eigenschaftsprofil im einzelnen eingestellt und optimiert werden kann und welche der praktisch zahllosen Alternativen, die sich aus mehreren Listen herleiten lassen, am besten funktionieren, wird weder in der Beschreibung noch anhand eines Beispiels konkretisiert.

Aus der internationalen Patentanmeldung WO 98/40170 ist ein Dual-Cure-Klarlack für ein Naß-in-naß-Verfahren bekannt, bei dem man eine Schicht aus einem Basislack mit einem Klarlack überschichtet, wonach man die resultierende Klarlackschicht vor dem gemeinsamen Einbrennen mit aktinischer Strahlung bestrahlt. Der Klarlack enthält, bezogen auf seinen Festkörper, 50 bis 98 Gew.-% aus einem thermisch durch Additions-und/oder Kondensationsreaktionen härtbaren System A), das im wesentlichen frei von radikalisch polymerisierbaren Doppelbindungen und im wesentlichen frei von mit radikalisch polymerisierbaren Doppelbindungen des Systems B) anderweitig reaktionsfähigen Gruppen ist, und 2 bis 50 Gew.-% aus einem unter Einwirkung von aktinischer Strahlung durch radikalische Polymerisation olefinischer Doppelbindungen härtbaren System B).

Vorzugsweise enthält das System A) ein hydroxyfunktionelles Acrylatbindemittel, dessen Glasübergangstemperatur jedoch nicht näher spezifiziert wird. Somit kann der Fachmann der internationalen Patentanmeldung nichts über die Bedeutung dieses Parameters für die Einstellung der Kratzfestigkeit und anderer wichtiger anwendungstechnischer Eigenschaften, wie die Chemikalienbeständigkeit, von Klarlackierungen insbesondere in den Schattenzonen von komplex geformten dreidimensionalen Substraten entnehmen.

Das durch radikalische Polymerisation olefinischer Doppelbindungen härtbare System B) kann ein hexafunktionelles, aliphatisches Urethanacrylat eines theoretischen Molgewichts von 1.000 enthalten.

Als Vernetzungsmittel für das System A) können blockierte cycloaliphatische oder aliphatische Diisocyanate, wie Hexamethylendiisocyanat und Isophorondiisocyanat, sowie Polyisocyanate auf dieser Basis verwendet werden. Die Steuerung der Glasübergangstemperatur Tg der Klarlackierungen über den Einsatz von weichen, flexibilisierenden Segmenten wird jedoch nicht erwähnt, und es wird in dieser Hinsicht nicht zwischen den angegebenen blockierten Polyisocyanaten unterschieden.

Die bekannten Dual-Cure-Klarlacke können als wäßrige Emulsionen vorliegen. Dabei kann der emulgierte Zustand durch Zusatz externer Emulgatoren erreicht werden oder es handelt sich bei den Systemen A) und/oder B) um Systeme, die in Wasser selbstemulgierend wirkende Gruppen, beispielsweise ionische Gruppen, enthalten. Indes handelt es sich hierbei nicht um Pulverslurries, sondern um disperse Systeme, bei denen eine flüssige in einer anderen flüssigen Phase verteilt ist, mit der sie nicht mischbar ist (vgl. Römpp Lexikon Lacke und Druckfarben, Georg Thieme Verlag, Stuttgart, New York, 1998, Seite 190, »Emulsionen«).

Die bekannten Dual-Cure-Klarlacke sollen Klarlackierungen mit hervorragenden optisch-ästhetischen Eindruck liefern. Bei ihrer Herstellung soll es nicht zum Ablaufen an senkrechten Flächen kommen. Die Klarlackierungen sollen eine reduzierte Anfälligkeit gegen Chemikalien und Verkratzungen, insbesondere gegen Säure und Waschverkratzungen, aufweisen.

Aus der deutschen Patentanmeldung DE 199 08 013 A1 ist eine strukturviskose Dual-Cure-Pulverklarlack-Slurry bekannt, die feste sphärische Partikel einer mittleren Teilchengröße von 0,8 bis 20 $\mu$m und einer maximalen Teilchengröße von 30 $\mu$m enthält, wobei die Dual-Cure-Pulverklarlack-Slurry einen Gehalt an Ionen bildenden Gruppen von 0,05 bis 1 meq/g, einen Gehalt an Neutralisationsmitteln von 0,05 bis 1 meq/g und eine Viskosität von (i) 50 bis 1000 mPas bei einer Scherrate von 1000 s$^{-1}$, (ii) 150 bis 8000 mPas bei einer Scherrate von 10 s$^{-1}$ und (iii) 180 bis 12000 mPas bei einer Scherrate von 1 s$^{-1}$ aufweist.

Die bekannte Dual-Cure-Pulverklarlack-Slurry kann als fakultative Bestandteile Polyacrylate als thermisch härtbare Bindemittel enthalten. Es wird nicht angegeben, welche Glasübergangstemperatur Tg die Polyacrylate in einzelnen haben sollen.

Als Vernetzungsmittel für die thermische Härtung können blockierte Polyisocyanate verwendet werden. Die Steuerung der Glasübergangstemperatur Tg der Klarlackierungen über den Einsatz von weichen, flexibilisierenden Segmenten wird jedoch nicht erwähnt, und es wird in dieser Hinsicht auch nicht zwischen den angegebenen blockierten Polyisocyanaten unterschieden.

Als Bindemittel, die mit aktinischer Strahlung härtbar sind, können unter anderem Urethanacrylate eingesetzt werden. Über die Acrylatfunktionalität werden keine Angaben gemacht. Außerdem wird die Steuerung der Glasübergangstemperatur Tg der Klarlackierungen über den Einsatz von hartmachenden Segmenten in den Urethanacrylaten ebenfalls nicht erwähnt. Die bevorzugten Bindemittel sind indes Acrylatharze, die Kohlenstoff-Kohlenstoff-Doppelbindungen enthalten.

Die bekannte Dual-Cure-Pulverklarlack-Slurry kann in einfacher Weise hergestellt werden und hat ein sicheres Applikationsverhalten hinsichtlich Kochern bei den geforderten Filmschichtstärken von 40-50 $\mu$m auch ohne Zuhilfenahme von organischen Lösemitteln. Die hieraus hergestellten Klarlackierungen weisen hervorragende anwendungstechnische Eigenschaften auf. So haften sie fest auf alle üblichen und bekannten Basislackschichten oder grundierten oder ungrundierten Substraten. Sie sind von hohem Glanz, kratzfest, glatt, witterungsbeständig und frei von Störungen.

Aus der deutschen Patentanmeldung DE 199 08 018 A1 ist ebenfalls eine Dual-Cure-Pulverklarlack-Slurry bekannt, die Bestandteile, die funktionelle Gruppen (A) enthalten, die sie mit aktinischer Strahlung härtbar machen, und Bestandteile, die komplementäre funktionelle Gruppen (B), insbesondere Epoxidgruppen, enthalten, die sie thermisch härtbar machen, im Gewichtsverhältnis von 50 : 1 bis 1 : 50 enthalten.

Als thermisch härtbare Bindemittel können unter anderem Polyacrylate, insbesondere epoxidgruppenhaltige, verwendet werden.

Als mit aktinischer Strahlung härtbare Bindemittel können unter anderem Urethanacrylate eingesetzt werden. Über deren Funktionalität und Struktur wird indes nichts ausgesagt. Darüber hinaus enthält die bekannte Dual-Cure-Pulverklarlack-Slurry Vernetzungsmittel, insbesondere ein carboxylgruppenhaltiges. Es können blockierte Polyisocyanate mitverwendet werden. Die Steuerung der Glasübergangstemperatur Tg der Klarlackierungen über den Einsatz von weichen, flexibilisierenden Segmenten wird jedoch nicht erwähnt, und es wird in dieser Hinsicht auch nicht zwischen den angegebenen blockierten Polyisocyanaten unterschieden.

Darüber hinaus kann die bekannte Dual-Cure-Pulverklarlack-Slurry als fakultative Bestandteile oligomere und polymere thermisch härtbare Reaktiverdünner enthalten. Geeignet sind unter anderem Polyacrylate mit einer Glasübergangstemperatur Tg von -35 bis +85°C, einer Säurezahl von 0 bis 35 mg KOH/g und einer Hydroxylzahl von 40 bis 240 mg KOH/g.

Auch diese bekannte Dual-Cure-Pulverklarlack-Slurry weist ein sicheres Applikationsverhalten hinsichtlich Kochern bei Filmschichtstärken von 30-50 $\mu$m auf. Die Klarlackierungen weisen hervorragende anwendungstechnische Eigenschaften auf. So haften sie fest auf allen üblichen und bekannten Basislackschichten oder grundierten und ungrundierten Substraten. Sie sind von hohem Glanz, glatt, kratzfest, witterungsbeständig und frei von Störungen

Aus der deutschen Patentanmeldung DE 199 20 799 A1 ist ein Dual-Cure-Beschichtungsstoff bekannt, der zwingend

(a1) mindestens einen Bestandteil mit

(a11) mindestens zwei funktionellen Gruppen, welche der Vernetzung mit aktinischer Strahlung dienen, und gegebenenfalls

(a12) mindestens einer funktionellen Gruppe, welche mit einer komplementären funktionellen Gruppe (a22) im Bestandteil (a2) thermische Vernetzungsreaktionen eingehen können,

und

(a2) mindestens einen Bestandteil mit

(a21) mindestens zwei funktionellen Gruppen, welche der Vernetzung mit aktinischer Strahlung dienen, und

(a22) mindestens einer funktionellen Gruppe, welche mit einer komplementären funktionellen Gruppe (a12) im Bestandteil (a1) thermische Vernetzungsreaktionen eingehen kann, sowie gegebenenfalls

(a3) mindestens einen Photoinitiator,

(a4) mindestens einen Initiator der thermischen Vernetzung,

(a5) mindestens einen mit aktinischer Strahlung und/oder thermisch härtbaren Reaktiwerdünner,

(a6) mindestens ein Lackadditiv und/oder

(a7) mindestens einen thermisch härtbaren Bestandteil,

enthalten; mit der Maßgabe, daß der Beschichtungsstoff mindestens einen thermisch härtbaren Bestandteil (a7) enthält, wenn der Bestandteil (a1) keine funktionelle Gruppe (a12) aufweist.

Der Dual-Cure-Beschichtungsstoff kann als Klarlack eingesetzt werden und kann bei der geeigneten Wahl seiner Bestandteile auch eine Dual-Cure-Pulverslurry sein.

Als Bestandteil (a1) kann unter anderem ein Urethan(meth)acrylat verwendet werden. Es können aber auch hydroxylgruppenhaltige Urethan(meth)acrylate (a1) eingesetzt werden.

Bei dem zwingend vorhandenen Bestandteil (a2) handelt es sich insbesondere um ein Isocyanatoacrylat mit freien Isocyanatgruppen, wie es beispielsweise in der europäischen Patentanmeldung EP 0 928 800 A1 beschrieben wird.

Darüber hinaus kann das Dual-Cure-Gemisch noch thermisch härtbare (Meth)Acrylatcopolymerisate (a7) enthalten, zu denen allerdings zahlreiche Alternativen angegeben werden. Außerdem werden die thermisch härtbaren (Meth)Acrylatcopolymerisate (a7) weder hinsichtlich ihrer Zusammensetzung, ihrer Glasübergangstemperatur Tg und ihres Gehalts an reaktiven funktionellen Gruppen für die thermische Vernetzung näher charakterisiert.

Desweiteren kann der Dual-Cure-Beschichtungsstoff unter anderem blockierte Polyisocyanate als Bestandteil (a7) enthalten. Es wird nicht darauf hingewiesen, daß aus den zahlreichen vorgeschlagenen blockierten Polyisocyanaten, diejenigen ausgewählt werden sollen, die mindestens ein weiches, flexibilisierendes Segment als Molekülbaustein enthalten.

Die mit Hilfe der bekannten Dual-Cure-Klarlacke hergestellten Klarlackierungen weisen eine gute Kratzfestigkeit, Zwischenschichthaftung, Witterungsstabilität und Chemikalienstabilität sowie ein hervorragendes optisches Eigenschaftsprofil auf.

Ein vergleichbarer Dual-Cure-Beschichtungsstoff ist aus der deutschen Patentanmeldung DE 199 20 801 A1 bekannt. Was die thermisch härtbaren (Meth)Acrylatcopolymerisate betrifft, wird lediglich angegeben, daß ihre Menge im allgemeinen 40 Gew.-%, bezogen auf den Beschichtungsstoff, nicht überschreiten soll. Der bekannte Dual-Cure-Beschichtungsstoff wird zur Herstellung von mehrschichtigen Klarlackierungen verwendet, die hochkratzfest, witterungsstabil, vergilbungsfrei, hart, flexibel und von Oberflächenstörungen frei sind, auf allen Substraten sowie innerhalb der Klarlackierungen eine hohe Haftung aufweisen und sich in der für einen hervorragenden optischen Gesamteindruck notwendigen hohen Schichtdicke herstellen lassen. Zu diesem Zweck wird eine Schicht aus dem Dual-Cure-Beschichtungsstoff mit einer weiteren Schicht aus dem Dual-Cure-Beschichtungsstoff, der Nanopartikel enthält, überschichtet, wonach man die beiden Schichten gemeinsam aushärtet. Dieses Verfahren ist aber vergleichsweise aufwendig.

Die bisher bekannten Dual-Cure-Pulverslurries enthalten keine wäßrigen Polyurethandispersionen, die Hydroxylgruppen, blockierte Isocyanatgruppen olefinisch ungesättigte Gruppen sowie dispergierende ionische Gruppen enthalten.

In den nicht vorveröffentlichten deutschen Patentanmeldungen DE 199 47 054.5 und DE 199 47 054.5 wird eine wäßrige Dual-Cure-Polyurethandispersion und eine Dual-Cure-Pulverslurry beschrieben, die Hydroxylgruppen, blockierte Isocyanatgruppen, olefinisch ungesättigte Gruppen sowie dispergierende ionische Gruppen enthält. Die wäßrige Polyurethandispersion enthält aber keine der vorstehend beschriebenen bekannten Dual-Cure-Pulverslurries und keine Urethan(meth)acrylate.

Die bisher bekannten wäßrigen Dual-Cure-Dispersionen und Dual-Cure-Pulverslurries und die hieraus hergestellten Beschichtungen weisen ein durchaus vorteilhaftes Eigenschaftprofil auf, das es zu erhalten gilt.

Die bekannten Dual-Cure-Pulverslurries zeigen aber im kontinuierlichen Lackierprozeß, wie er beispielsweise im Durchlaufbetrieb in der Lackieranlage einer Kraftfahrzeugfabrik durchgeführt wird, gewisse Schwächen. In diesen Lackieranlagen werden die applizierten Dual-Cure-Pulverslurry-Schichten auf den Karosserien zunächst bei höheren Temperaturen getrocknet und thermisch gehärtet, wonach sie unmittelbar anschließend möglichst ohne wesentliche Abkühlung mit UV-Strahlung gehärtet werden.

Da die Karosserien komplex geformte dreidimensionale Substrate darstellen, weisen sie zahlreiche Schattenzonen, wie Hohlräume, Falzen und anderen Konstruktionsbedingte Hinterschneidungen oder Kanten, auf. Die optimale, insbesondere vollständige, Ausleuchtung der Schattenzonen mit UV-Strahlung ist aber apparativ und regeltechnisch sehr aufwendig und zeitraubend, weil hierbei zusätzlich Punkt-, Kleinflächen- und Rundumstrahler verbunden mit automatischen Bewegungseinrichtungen verwendet werden müssen.

Wird aber auf eine optimale Ausleuchtung verzichtet, mußte bisher in Kauf genommen werden, daß die resultierenden Beschichtungen oder Lackierungen in den Schattenzonen ein unbefriedigendes anwendungstechnisches Eigenschaftsprofil haben. Insbesondere erreichen sie nicht die Kratzfestigkeit und Chemikalienbeständigkeit der vollständig gehärteten Beschichtungen oder Lackierungen außerhalb der Schattenzonen. Dies kann nicht nur bei der späteren Nutzung der Kraftfahrzeuge Probleme bereiten, sondern bereits beim weiteren Lackierprozeß in der Lackieranlage und bei dem weiteren Herstellprozeß, beispielsweise beim Einbau von Sitzen, Türen, Fenstern, elektrischen Teilen und Motoren in die lackierten Karosserien. Hierbei kann es leicht zur Schädigung der Lackierungen durch mechanische und chemische Einwirkung kommen.

Die vorstehend geschilderten Probleme treten auch bei den Dual-Cure-Dichtungsmassen und -Klebstoffen des Standes der Technik und den hieraus hergestellten Dichtungen und Klebschichten auf.

Aufgabe der vorliegenden Erfindung ist es, neue Dual-Cure-Dispersionen, insbesondere Dual-Cure-Pulverslurries, bereitzustellen, die einfach herstellbar sind und ein hervorragendes Applikationsverhalten haben. Die neuen Dual-Cure-Dispersionen sollen Beschichtungen, Klebschichten und Dichtungen, insbesondere Beschichtungen, wie Klarlackierungen, ein-oder mehrschichtige farb- und/oder effektgebende Beschichtungen und Kombinationseffektschichten, liefern, die das anwendungstechnische Eigenschaftsprofil der Beschichtungen, Klebschichten und Dichtungen des Standes der Technik aufweisen, wenn nicht gar übertreffen. Auf und in komplex geformten dreidimensionalen Substraten sollen sie insbesondere im Durchlaufbetrieb auch bei nicht optimaler, insbesondere nicht vollständiger, Ausleuchtung der Schattenzonen mit aktinischer Strahlung ein gutes anwendungstechnisches Eigenschaftprofil, insbesondere was die Kratzfestigkeit und die Chemikalienfestigkeit betrifft, aufweisen, so daß die Härtung mit aktinischer Strahlung apparativ und meß- und regeltechnisch vereinfacht und die Prozesszeit verkürzt werden können.

Demgemäß wurden die neuen, thermisch und mit aktinischer Strahlung härtbaren wäßrigen Dispersionen gefunden, enthaltend

(I) flüssige, hochviskose und/oder feste, unter Lagerungs- und Anwendungsbedingungen dimensionsstabile Partikel, enthaltend

(I A) ein Bindemittel, das frei ist von Kohlenstoff-Kohlenstoff-Doppelbindungen, die mit aktinischer Strahlung aktivierbar sind, enthaltend mindestens ein (Meth)Acrylatcopolymerisat mit im statistischen Mittel mindestens einer isocyanatreaktiven funktionellen Gruppe und mindestens einer dispergierenden funktionellen Gruppen im Molekül, und

(I B) mindestens ein blockiertes Polyisocyanat;

(II) flüssige, hochviskose und/oder feste, unter Lagerungs- und Anwendungsbedingungen dimensionsstabile Partikel, enthaltend mindestens ein Polyurethan (II) mit mindestens einer isocyanatreaktiven funktionellen Gruppe, mindestens einer funktionellen Gruppe mit mindestens einer mit aktinischer Strahlung aktivierbaren Bindung sowie mindestens einer dispergierenden funktionellen Gruppe,
sowie

(III) mindestens einen olefinisch ungesättigten Bestandteil, der frei ist von isocyanatreaktiven funktionellen Gruppen und im statistischen Mittel mehr als eine mit aktinischer Strahlung aktivierbare Kohlenstoff-Kohlenstoff-Doppelbindung im Molekül enthält.

Im Hinblick auf den Stand der Technik es überraschend und für den Fachmann nicht vorhersehbar, daß die der Erfindung zugrundeliegende Aufgabe mit Hilfe der neuen wäßrigen Dual-Cure-Dispersionen, insbesondere der neuen Dual-Cure-Pulverslurries, gelöst werden konnte.

Vor allem war es überraschend, daß die neuen wäßrigen Dual-Cure-Dispersionen, insbesondere die neuen Dual-Cure-Pulverslurries, Beschichtungen, Klebschichten und Dichtungen, insbesondere Beschichtungen, wie Klarlakkierungen, ein- oder mehrschichtige, farb-und/oder effektgebende Beschichtungen und Kombinationseffektschichten, lieferten, die das anwendungstechnische Eigenschaftsprofil der Beschichtungen, Klebschichten und Dichtungen des Standes der Technik aufwiesen, wenn nicht gar übertrafen.

Noch mehr überraschte, daß sie auf und in komplex geformten dreidimensionalen Substraten - insbesondere im Durchlaufbetrieb auch bei nicht optimaler, insbesondere nicht vollständiger, Ausleuchtung der Schattenzonen mit aktinischer Strahlung - Beschichtungen, Klebschichten und Dichtungen lieferten, die ein gutes anwendungstechnisches Eigenschaftprofil, insbesondere was die Kratzfestigkeit und die Chemikalienfesfigkeit betraf, aufwiesen, so daß die Härtung mit aktinischer Strahlung apparativ und meß- und regeltechnisch vereinfacht und die Prozesszeit verkürzt werden konnten.

Insbesondere überraschte die breite Anwendbarkeit der neuen wäßrigen Dual-Cure-Dispersionen, insbesondere der Dual-Cure-Pulverslurries, auf den unterschiedlichsten Anwendungsgebieten.

Die neuen wäßrigen Dual-Cure-Dispersionen enthalten die Partikel (I) und (II).

Die Partikel (I) sind flüssig, fest und/oder hochviskos sowie unter Lagerungs unter Anwendungsbedingungen dimensionstabil. In den neuen wäßrigen Dual-Cure-Dispersionen kann nur eine Art (flüssige, fest oder hochviskos) vorliegen, oder es können können zwei Arten (flüssig und fest; flüssig und hochviskos oder hochviskos und fest) oder alle drei Arten von Partikeln (I) nebeneinander vorliegen. Vorzugsweise sind die Partikel (I) hochviskos und/oder fest, insbesondere fest.

Desgleichen sind die Partikel (II) flüssig, fest und/oder hochviskos sowie unter Lagerungs- unter Anwendungsbedingungen dimensionstabil. In den neuen wäßrigen Dual-Cure-Dispersionen kann nur eine Art (flüssige, fest oder hochviskos) vorliegen, oder es können können zwei Arten (flüssig und fest; flüssig und hochviskos oder hochviskos und fest) oder alle drei Arten von Partikeln (II) nebeneinander vorliegen. Vorzugsweise sind die Partikel (II) hochviskos und/ oder fest, insbesondere fest.

In der neuen wäßrigen Dual-Cure-Dispersionen wiederum können unterschiedliche Arten von Partikeln (I) und (II) nebeneinander vorliegen. Beispielsweise können

- flüssige Partikel (I) mit flüssigen, festen und/oder hochviskosen Partikeln (II),
- hochviskose Partikel (I) mit flüssigen, festen und/oder hochviskosen Partikeln (II) oder
- feste Partikel (I) mit flüssigen, festen und/oder hochviskosen Partikeln (II) -

kombiniert werden. Weitere Kombinationsmöglichkeiten kann der Fachmann leicht herleiten, so daß hier nicht näher darauf eingegangen werden muß. Demnach umfassen die neuen wäßrigen Dual-Cure-Dispersionen sowohl neue wäßrigen Dual-Cure-Emulsionen und neue Dual-Cure Pulverslurries.

Vorzugsweise werden feste und/oder hochviskose, insbesondere feste, Partikel (I) mit festen und/oder hochviskosen, insbesondere festen, Partikeln (II) kombiniert. In diesem Falle handelt es sich bei den neuen wäßrigen Dual-Cure-Dispersionen um die neuen Dual-Cure-Pulverslurries. Im folgenden wird die Erfindung anhand der neuen Dual-Cure-Pulverslurries beispielhaft erläutert. Das in diesem Zusammenhang Gesagte gilt indes auch für die neuen Dual-Cure-Dispersionen und -Emulsionen sinngemäß.

Im Rahmen der vorliegenden Erfindung bedeutet "hochviskos", daß sich die Partikel (I) und (II) unter den üblichen und bekannten Bedingungen der Lagerung und der Anwendung von Pulverslurries im wesentlichen wie feste Partikel verhalten.

Die Partikel (I) und (II) sind außerdem dimensionsstabil. Im Rahmen der vorliegenden Erfindung bedeutet "dimensionsstabil", daß die Partikel unter den üblichen und bekannten Bedingungen der Lagerung und der Anwendung von wäßrigen Dispersionen oder Pulverslurries weder agglomerieren noch in kleinere Partikel zerfallen, sondern auch unter dem Einfluß von Scherkräften im wesentlichen ihre ursprünglichen Form bewahren.

Vorzugsweise sind die neuen Dual-Cure-Pulverslurries frei von organischen Lösemitteln. Im Rahmen der vorliegenden Erfindung bedeutet dies, daß sie einen Restgehalt an flüchtigen Lösemitteln von < 10 Gew.-%, bevorzugt < 5 Gew.-% und besonders bevorzugt < 1 Gew.-% haben. Erfindungsgemäß ist es von ganz besonderem Vorteil, wenn der Restgehalt unterhalb der gaschromatographischen Nachweisgrenze liegt.

Vorzugsweise liegt die mittlere Teilchengröße der festen Partikel (I) und (II) bei 0,8 bis 20 $\mu$m, und besonders bevorzugt bei 3 bis 15 $\mu$m. Unter mittlerer Teilchengröße wird der nach der Laserbeugungsmethode ermittelte 50%-Medianwert verstanden, d.h., 50% der Partikel haben einen Teilchendurchmesser $\leq$ dem Medianwert und 50% der Partikel einen Teilchendurchmesser $\geq$ dem Medianwert.

Die neuen Dual-Cure-Pulverslurries mit Partikeln (I) und (II) mit derartigen mittleren Teilchengrößen weisen ein besseres Applikationsverhalten auf und zeigen bei den applizierten Filmstärken von > 30 $\mu$m, wie sie derzeitig in der Automobilindustrie bei der Endlackierung von Automobilen praktiziert werden, eine - wenn überhaupt - nur geringe Neigung zu Kochern und zum "mudcracking.

Die Teilchengröße findet ihre obere Begrenzung dann, wenn die Partikel (I) und (II) aufgrund ihrer Größe beim Einbrennen nicht mehr vollständig verlaufen können, und damit der Filmverlauf negativ beeinflußt wird. In Fällen geringerer Ansprüche an das Aussehen kann sie jedoch auch höher liegen. Als Obergrenze werden 30 $\mu$m für sinnvoll erachtet, da ab dieser Teilchengröße mit einer Verstopfung der Sprühdüsen und Förderaggregate der hochempfindlichen Applikationsapparaturen zu rechnen ist.

Vorzugsweise werden die vorstehend beschriebenen bevorzugten Teilchengrößen auch ohne Zuhilfenahme von zusätzlichen externen Emulgatoren erhalten, wenn die Partikel (I) und (II) einen Gehalt an dispergierenden funktionellen Gruppen, insbesondere an Ionen bildenden Gruppen, entsprechend einer mittleren Säurezahl oder Amin-Zahl von 5 bis 100 und insbesondere 10 bis 60 mg KOH/g Festkörper, haben.

Es wird vorzugsweise ein niedriger Gehalt solcher Gruppen angestrebt, da bei der Härtung der neuen Dual-Cure-Pulverslurries freie Gruppen dieser Art im Film zurückbleiben und diese die Festigkeit gegenüber Umweltstoffen und Chemikalien vermindern können. Andererseits muß der Gehalt an dispergierenden funktionellen Gruppen, insbesondere an Ionen bildenden Gruppen bzw. ionischen Gruppen, noch genügend hoch sein, um die gewünschte Stabilisierung zu gewährleisten.

Die Ionen bildenden Gruppen werden mit Hilfe von Neutralisationsmitteln vorzugsweise zu 100% neutralisiert oder auch nur zu < 100% teilneutralisiert.

Als Anionen bildende Gruppen kommen Säuregruppen wie Carbonsäure-, Sulfonsäure- oder Phosphonsäuregruppen in Betracht. Demgemäß werden als Neutralisationsmittel Basen, wie Alkalimetallhydroxide, Ammoniak oder Amine verwendet. Alkalimetallhydroxide sind nur in beschränktem Maße einsetzbar, da die Alkalimetallionen beim Einbrennen nicht flüchtig sind und durch ihre Unverträglichkeit mit organischen Stoffen den Film trüben und zu Glanzverlusten führen können. Daher sind Ammoniak oder Amine bevorzugt. Im Falle von Aminen werden wasserlösliche tertiäre Amine bevorzugt. Beispielhaft seien N,N-Dimethylethanolamin oder Aminomethylpropanolamin (AMP) genannt.

Als Kationen bildende Gruppen kommen primäre, sekundäre oder tertiäre Amine in Betracht. Demgemäß werden als Neutralisationsmittel insbesondere niedermolekulare organische Säuren wie Ameisensäure, Essigsäure oder Milchsäure verwendet.

Für den bevorzugten Einsatz der neuen Dual-Cure-Pulverslurries als Dual-Cure-Beschichtungsstoffe, -Klebstoffe oder -Dichtungsmassen werden Säuregruppen als Ionen bildende Gruppen bevorzugt, da die hieraus hergestellten Beschichtungen, Klebschichten oder Dichtungen in der Regel eine bessere Resistenz gegen Vergilbung aufweisen als die Beschichtungen, Klebschichten und Dichtungen, die aus den neuen Dual-Cure-Pulverslurries auf der Basis von Partikeln (I) und (II) mit kationischen Gruppen hergestellt werden.

Doch kationische Partikel (I) und (II) mit in Kationen überführbaren Gruppen wie Aminogruppen sind prinzipiell ebenfalls verwendbar, sofern das Einsatzgebiet deren typische Nebeneigenschaften wie ihre Neigung zur Vergilbung verkraftet.

Der erste wesentliche Bestandteil der neuen Dual-Cure-Pulverslurries sind die Partikel (I).

Die Partikel (I) enthalten ein Bindemittel (I A), das frei von Kohlenstoff-Kohlenstoff-Doppelbindungen ist, die mit aktinischer Strahlung aktivierbar sind. Im Rahmen der vorliegenden Erfindung bedeutet "frei von Kohlenstoff-Kohlenstoff-Doppelbindungen", daß die betreffenden Bindemittel (I A) keine oder nur technisch bedingte Spuren solcher Doppelbindungen aufweisen.

Das Bindemittel (I A) enthält mindestens ein, vorzugsweise mindestens zwei, (Meth)Acrylatcopolymerisat(e) (I A) mit im statistischen Mittel mindestens einer, vorzugsweise mindestens zwei, besonders bevorzugt mindestens drei und insbesondere mindestens vier isocyanatreaktiven funktionellen Gruppen und mindestens einer, vorzugsweise mindestens zwei, besonders bevorzugt mindestens drei und insbesondere mindestens vier dispergierende den funktionellen Gruppen, insbesondere Ionen bildenden Gruppen, im Molekül.

Beispiele geeigneter isocyanatreaktiver funktioneller Gruppen sind hier und im folgenden Thiol-; Hydroxyl- und primäre und sekundäre Aminogruppen, insbesondere Hydroxylgruppen.

Beispiele geeigneter Ionen bildender Gruppen sind die vorstehend beschriebenen, von denen die Säuregruppen bevorzugt verwendet werden.

Das (Meth)Acrylatcopolymerisat (I A) oder die Mischung aus mindestens zwei (Meth)Acrylatcopolymerisaten (I A) kann eine Glasübergangstemperatur Tg von -40 bis +80 °C aufweisen.

Wird nur ein (Meth)Acrylatcopolymerisat (I A) eingesetzt, kann es im angegebenen Temperaturbereich eine niedrige oder eine hohe Glasübergangstemperatur Tg aufweisen. Vorzugsweise weist das (Meth)Acrylatcopolymerisat (I A) eine niedrige Glasübergangstemperatur Tg, bevorzugt unterhalb der Raumtemperatur, insbesondere unterhalb 0 °C, auf.

In einer bevorzugten Ausführungsform enthält das Bindemittel (I A) mindestens ein, insbesondere ein, (Meth)Acrylatcopolymerisat (I A 1) und mindestens ein, insbesondere ein, (Meth)Acrylatcopolymerisat (I A 2) oder das Bindemittel besteht aus diesen (Meth)Acrylatcopolymerisaten (I A 1) und (I A 2).

Das (Meth)Acrylatcopolymerisat (I A 1) weist im statistischen Mittel mindestens eine, vorzugsweise mindestens zwei, besonders bevorzugt mindestens drei und insbesondere mindestens vier isocyanatreaktive funktionelle Gruppe(n) im Molekül und eine Glasübergangstemperatur Tg unterhalb der Raumtemperatur, vorzugsweise unterhalb 0, bevorzugt unterhalb -5, besonders bevorzugt unterhalb -10, ganz besonders bevorzugt unterhalb -15 und insbesondere unterhalb -20°C auf.

Das (Meth)Acrylatcopolymerisat (I A 2) weist mit im statistischen Mittel mindestens eine, vorzugsweise mindestens zwei, besonders bevorzugt mindestens drei und insbesondere mindestens vier isocyanatreaktive funktionelle Gruppe(n) im Molekül und eine Glasübergangstemperatur Tg oberhalb der Raumtemperatur, vorzugsweise oberhalb 30, vorzugsweise oberhalb 32, bevorzugt oberhalb 35, besonders bevorzugt oberhalb 40, ganz besonders bevorzugt oberhalb 42 und insbesondere oberhalb 45°C auf.

Beispiele geeigneter isocyanatreaktiver Gruppen zur Verwendung in den (Meth)Acrylatcopolymerisaten (I A 1) und (I A 2) sind die vorstehend beschriebenen. Dabei können die (Meth)Acrylatcopolymerisate (I A 1) und (I A 2) unterschiedliche oder gleiche isocyanatreaktive Gruppen oder Kombinationen von isocyanatreaktiven Gruppen enthalten, wobei die Anzahl der isocyanatreaktiven Gruppen in den (Meth)Acrylatcopolymerisaten (I A 1) einerseits und den (Meth)Acrylatcopolymerisaten (I A 2) andererseits gleich oder verschieden sein kann. Beispielsweise können die (Meth)Acrylatcopolymerisate (I A 1) Hydroxylgruppen und die (Meth)Acrylatcopolymerisate (I A 2) sekundäre und/oder primäre Aminogruppen enthalten. Zahlreiche weitere Permutationen sind hier denkbar, die der Fachmann in einfacher Weise herleiten kann, so daß hier nicht im Detail darauf eingegangen werden muß.

Vorzugsweise werden Hydroxylgruppen eingesetzt.

Der Gehalt der (Meth)Acrylatcopolymerisate (I A 1) und (I A 2) an Hydroxylgruppen kann breit variieren. Die Untergrenze ergibt sich aus der Maßgabe, daß mindestens eine Hydroxylgruppe in den (Meth)Acrylatcopolymerisaten (I A 1) und (I A 2) enthalten sein muß. Vorzugsweise liegt die Hydroxylzahl bei 50 bis 300, vorzugsweise 80 bis 250, bevorzugt 100 bis 220, besonders bevorzugt 120 bis 200, ganz besonders bevorzugt 140 bis 190 und insbesondere 150 bis 185 mg KOH/g.

Die (Meth)Acrylatcopolymerisate (I A 1) und (I A 2) weisen vorzugsweise eine Säurezahl von 3 bis 70, bevorzugt 3 bis 65, besonders bevorzugt 5 bis 60, ganz besonders bevorzugt 7 bis 55, insbesondere 10 bis 50 und speziell 12 bis 45 mg KOH/g auf. Es ist möglich, daß eines der (Meth)Acrylatcopolymerisate (I A 1) oder (I A 2) eine Säurezahl von 0 oder nahe 0 mg KOH/g aufweisen kann, wogegen das andere (Meth)Acrylatcopolymerisat (I A 2) oder (I A 1) eine Säurezahl > 0 mg KOH/g hat, solange das säuregruppenfreie (Meth)Acrylatcopolymerisat (I A) von dem säuregruppenhaltigen mit dispergiert wird. Vorzugsweise haben die (Meth)Acrylatcopolymerisate (I A 1) und (I A 2) die gleiche oder in etwa die gleiche Säurezahl.

Das Gewichtsverhältnis von (Meth)Acrylatcopolymerisat (I A 1) zu (Meth)Acrylatcopolymerisat (I A 2) kann von Bindemittel (I A) zu Bindemittel (I A) breit variieren. Vorzugsweise liegt das Gewichtsverhältnis von (I A1) zu (I A 2) bei 1 : 10 bis 10 : 1, bevorzugt 1 : 8 bis 8 : 1, besonders bevorzugt 1 : 6 bis 6 : 1, ganz besonders bevorzugt 1 : 4 bis 4 : 1 und insbesondere 1 : 2 bis 2 : 1.

Es ist ein besonderer Vorteil der Partikel (I), daß die vorstehend beschriebenen (Meth)Acrylatcopolymerisate (I A 1) und (I A 2) auch einzeln als Bindemittel (I A) eingesetzt werden können, ohne daß hierbei eine Verringerung des erfindungsgemäß bezweckten vorteilhaften technischen Effekts für die neuen Dual-Cure-Pulverslurries zu befürchten wäre. Denn es ist noch ein weiterer ganz besonderer Vorteil der neuen Dual-Cure-Pulverslurries, daß eine u. U. durch die Wahl des Bindemittels (I A) hervorgerufene ggf. unerwünschte Änderung des Eigenschaftprofils leicht durch die entsprechende Auswahl der nachstehend beschriebenen blockierten Polyisocyanate (I B), der Partikel (II) und/oder der nachstehend beschriebenen olefinisch ungesättigten Bestandteile (III) kompensiert oder sogar überkompensiert werden kann.

Die vorstehend beschriebenen (Meth)Acrylatcopolymerisate (I A), inklusive der (Meth)Acrylatcopolymerisate (I A 1) und (I A 2), werden durch radikalische Copolymerisation von mindestens zwei, vorzugsweise mindestens drei und insbesondere mindestens vier unterschiedlichen olefinisch ungesättigten Monomeren (a) hergestellt.

Bei einem der Monomeren (a) handelt es sich um ein olefinisch ungesättigtes Monomer (a1), durch das isocyanatreaktive funktionelle Gruppen in die (Meth)Acrylatcopolymerisate (I A) eingeführt werden. Bei mindestens einem der weiteren Monomeren (a) handelt es sich im wesentlichen um olefinisch ungesättigte Monomere (a2), die keine isocyanatreaktiven funktionellen Gruppen aufweisen. Diese Monomeren (a2) können frei von reaktiven funktionellen Gruppen sein oder reaktive funktionelle Gruppen aufweisen, die mit anderen, komplementären reaktiven funktionellen Gruppen, ausgenommen Isocyanatgruppen, thermische Vernetzungsreaktionen eingehen können.

Beispiele geeigneter olefinisch ungesättigter Monomere (a1) sind

- Hydroxyalkylester von alpha,beta-olefinisch ungesättigten Carbonsäuren, wie Hydroxyalkylester der Acrylsäure, Methacrylsäure und Ethacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat oder -ethacrylat; 1,4-Bis(hydroxymethyl)cyclohexan-, Octahydro-4,7-methano-1H-indendimethanol- oder Methylpropandiolmonoacrylat, -monomethacrylat, -monoethacrylat oder -monocrotonat; oder Umsetzungsprodukte aus cyclischen Estern, wie z.B. epsilon-Caprolacton und diesen Hydroxyalkylestern;

- olefinisch ungesättigte Alkohole wie Allylalkohol;

- Allylether von Polyolen wie Trimethylolpropanmonoallylether oder Pentaerythritmono-, -di- oder -triallylether. Die höherfunktionellen Monomeren (I A1) werden im allgemeinen nur in untergeordneten Mengen verwendet. Im Rahmen der vorliegenden Erfindung sind hierbei unter untergeordneten Mengen an höherfunktionellen Monomeren solche Mengen zu verstehen, welche nicht zur Vernetzung oder Gelierung der (Meth)Acrylatcopolymerisate (I A 1) und/oder (I A 2) führen, es sei denn, die (Meth)Acrylatcopolymerisate (I A 1) und/oder (I A 2) sollen in der Form von vernetzten Mikrogelteilchen vorliegen;

- Umsetzungsprodukte von alpha,beta-olefinisch Carbonsäuren mit Glycidylestern einer in alpha-Stellung verzweigten Monocarbonsäure mit 5 bis 18 Kohlenstoffatomen im Molekül. Die Umsetzung der Acryl- oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Monomer (a1) das Umsetzungsprodukt von Acryl- und/oder Methacrylsäure mit dem Glycidylester der Versatic®-Säure eingesetzt. Dieser Glycidylester ist unter dem Namen Cardura® E10 im Handel erhältlich. Ergänzend wird auf Römpp Lexikon Lacke und Druckfarben, Georg Thieme Verlag, Stuttgart, New York, 1998, Seiten 605 und 606, verwiesen;

- Allylamin und Crotylamin;

- Aminoalkylester von alpha,beta-olefinisch ungesättigten Carbonsäuren, wie Aminoethylacrylat, Aminoethylmethacrylat oder N-Methylaminoethylacrylat;

- Formaldehydaddukte von Aminoalkylestern von alpha,beta-olefinisch ungesättigten Carbonsäuren und von alpha, beta-ungesättigten Carbonsäureamiden, wie N-Methylol- und N,N-Dimethylol-aminoethylacrylat, -aminoethylmethacrylat, -acrylamid und -methacrylamid; sowie

- Acryloxysilangruppen und Hydroxylgruppen enthaltende olefinisch ungesättigte Monomere, herstellbar durch Umsetzung hydroxyfunktioneller Silane mit Epichlorhydrin und anschließender Umsetzung des Zwischenprodukts mit einer alpha,beta-olefinisch ungesättigten Carbonsäure, insbesondere Acrylsäure und Methacrylsäure, oder ihren Hydroxyalkylestern.

Von diesen Monomeren (a1) sind die Hydroxyalkylester, insbesondere die 2-Hydroxyethyl-, 2-Hydroxypropyl-, 3-Hydroxypropyl-, 3-Hydroxybutyl-, 4-Hydroxybutylester der Acrylsäure und Methacrylsäure von Vorteil und werden deshalb besonders bevorzugt verwendet.

Beispiele geeigneter olefinisch ungesättigter Monomere (a2) sind

- alpha,beta-olefinisch ungesättigte Carbonsäuren, wie Acrylsäure, Methacrylsäure, Ethacrylsäure, Crotonsäure, Maleinsäure, Fumarsäure, Itaconsäure, Maleinsäuremono(meth)acryloyloxyethylester, Bernsteinsäuremono(meth)acryloyloxyethylester und Phthalsäuremono(meth)acryloyloxyethylester, sowie Vinylbenzoesäure (Alle Isomere) und alpha-Methylvinylbenzoesäure (Alle Isomere), insbesondere. Acrylsäure und/oder Methacrylsäure;

- Alkyl- und Cycloalkylester von alpha,beta-olefinisch ungesättigten Carbonsäuren, -phosphonsäuren und -sulfonsäuren, wie (Meth)Acrylsäure-, Crotonsäure-, Ethacrylsäure-, Vinylphosphonsäure- oder Vinylsulfonsäurealkyl- oder-cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat, -methacrylat,

- crotonat, -ethacrylat oder -vinylphosphonat oder vinylsulfonat; cycloaliphatische (Meth)acrylsäure-, Crotonsäure-, Ethacrylsäure-, Vinylphosphonsäure- oder Vinylsulfonsäureester, insbesondere Cyclohexyl-, Isobornyl-, Dicyclopentadienyl-, Octahydro-4,7-methano-1 H-inden-methanol- oder tert.-Butylcyclohexyl(meth)acrylat, -crotonat, -ethacrylat,-vinylphosphonat oder vinylsulfonat. Diese können in untergeordneten Mengen höherfunktionelle (Meth) Acrylsäure-, Crotonsäure- oder Ethacrylsäurealkyl- oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder-1,4-diol-di(meth)acrylat; Trimethylolpropantri(meth)acrylat; oder Pentaerythrittetra(meth)acrylat sowie die analogen Ethacrylate oder Crotonate enthalten. Im Rahmen der vorliegenden Erfindung sind hierbei unter untergeordneten Mengen an höherfunktionellen Monomeren (I A2) solche Mengen zu verstehen, welche nicht zur Vernetzung oder Gelierung der (Meth)Acrylatcopolymerisate (I A) führen, es sei denn, die (Meth)Acrylatcopolymerisate (I A) sollen in der Form von vernetzten Mikrogelteilchen vorliegen;

- Allylether von Alkoholen, wie Allylethylether, Allylpropylether oder Allyl-n-butylether, oder von Polyolen, wie Ethylenglykoldiallylether, Trimethylolpropantriallylether oder Pentaerythrittetraallyläther. Hinsichtlich der höherfunktionellen Allylether (a2) gilt das vorstehend Gesagte sinngemäß;

- Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien;

- Amide von alpha,beta-olefinisch ungesättigten Carbonsäuren, wie (Meth)Acrylsäureamid, N-Methyl -, N,N-Dimethyl-, N-Ethyl-, N,N-Diethyl-, N-Propyl-, N,N-Dipropyl, N-Butyl-, N,N-Dibutyl- und/oder N,N-Cyclohexyl-methyl-(meth) acrylsäureamid;

- Epoxidgruppen enthaltende Monomere, wie der Glycidylester der Acrylsäure, Methacrylsäure, Ethacrylsäure, Crotonsäure, Maleinsäure, Fumarsäure und/oder Itaconsäure;

- vinylaromatische Kohlenwasserstoffe, wie Styrol, alpha-Alkylstyrole, insbesondere alpha-Methylstyrol und Vinyltoluol, und Diphenylethylen oder Stilben;

- Nitrile, wie Acrylnitril und/oder Methacrylnitril;

- Vinylverbindungen wie Vinylchlorid, Vinylfluorid, Vinylidendichlorid, Vinylidendifluorid; -N-Vinylpyrrolidon; Vinylether wie Ethylvinylether, n-Propylvinylether, Isopropylvinylether, n-Butylvinylether, Isobutylvinylether und/oder Vinylcyclohexylether; Vinylester wie Vinylacetat, Vinylpropionat, Vinylbutyrat, Vinylpivalat, Vinylester der Versatic®-Säuren, die unter dem Markennamen VeoVa® von der Firma Deutsche Shell Chemie vertrieben werden (ergänzend wird auf Römpp Lexikon Lacke und Druckfarben, Georg Thieme Verlag, Stuttgart, New York, 1998, Seite 598 sowie Seiten 605 und 606, verwiesen) und/oder der Vinylester der 2-Methyl-2-ethylheptansäure; und

- Polysiloxanmakromonomere, die ein zahlenmittleres Molekulargewicht $M_n$ von 1.000 bis 40.000, bevorzugt von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül, aufweisen, wie sie in der DE 38 07 571 A1 auf den Seiten 5 bis 7, der DE 37 06 095 A1 in den Spalten 3 bis 7, der EP 0 358 153 B1 auf den Seiten 3 bis 6, in der US 4,754,014 A1 in den Spalten 5 bis 9, in der DE 44 21 823 A1 oder in der der internationalen Patentanmeldung WO 92/22615 auf Seite 12, Zeile 18, bis Seite 18, Zeile 10, beschrieben sind.

Generell gilt, das die Monomeren (a1) und (a2) so ausgewählt werden, daß das Eigenschaftsprofil der (Meth) Acrylatcopolymerisate (I A) im wesentlichen von den vorstehend beschriebenen (Meth)Acrylatmonomeren (a1) und (a2) bestimmt wird, wobei die Monomeren (a1) und/oder (a2), die anderen Monomerklassen entstammen, dieses Eigenschaftsprofil in vorteilhafter Weise breit und gezielt variieren. Dabei werden die Monomeren (a) so ausgewählt, daß sich die vorstehend beschriebenen Glasübergangstemperaturen Tg sowie die Hydroxylzahlen und Säurezahlen einstellen.

Die Auswahl der Monomeren (a) kann vom Fachmann unter Zuhilfenahme der folgenden Formel von Fox, mit der die Glasübergangstemperaturen von Polyacrylatharzen näherungsweise berechnet werden können, vorgenommen werden:

$$\frac{1}{Tg} = \sum_{n=1}^{n=x} W_n / Tg_n; \qquad \sum_n W_n = 1$$

$Tg$ = Glasübergangstemperatur des (Meth)Acrylatcopolymerisats
$W_n$ = Gewichtsanteil des n-ten Monomers
$Tg_n$ = Glasübergangstemperatur des Homopolymers aus dem n-ten Monomer
$x$ = Anzahl der verschiedenen Monomeren

Methodisch gesehen weist die Copolymerisation keine Besonderheiten auf, sondern erfolgt mit Hilfe der Methoden und Vorrichtungen, wie sie üblicherweise für die radikalische Copolymerisation in Lösung oder in Masse in der Gegenwart eines radikalischen Initiators angewandt werden.

Als Beispiele für einsetzbare radikalische Initiatoren werden genannt: Dialkylperoxide, wie Di-tert.-Butylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethyl- hexanoat oder tert.-Butylper-2-ethylhexanoat; Peroxodicarbonate; Kalium-, Natrium- oder Ammoniumsperoxodisulfat; Azoinitiatoren, beispielsweise Azodinitrile wie Azobisisobutyronitril; C-C-spaltende Initiatoren wie Benzpinakolsilylether; oder eine Kombination eines nicht oxidierenden Initiators mit Wasserstoffperoxid. Es können auch Kombinationen der vorstehend beschriebenen Initiatoren eingesetzt werden. Weitere Beispiele geeigneter Initiatoren werden in der deutschen Patentanmeldung DE 196 28 142 A1, Seite 3, Zeile 49, bis Seite 4, Zeile 6, beschrieben.

In den organischen Lösungen oder in Masse werden dann die Monomeren (a) mit Hilfe der vorstehend genannten radikalbildenden Initiatoren bei Reaktionstemperaturen, die vorzugsweise unterhalb der niedrigsten Zersetzungstemperatur der jeweils eingesetzten Monomeren (a) liegen, copolymerisiert.

Beispiele organischer Lösemittel werden in »Paints, Coatings and Solvents«, Dieter Stoye und Werner Freitag (Editoren), Wiley-VCH, 2. Auflage, 1998, Seiten 327 bis 349, beschrieben.

Es ist bevorzugt, daß mit dem Initiatorzulauf einige Zeit, im allgemeinen ca. 1 bis 15 Minuten, vor dem Zulauf der Monomeren begonnen wird. Ferner ist ein Verfahren bevorzugt, bei dem die Initiatorzugabe zum gleichen Zeitpunkt wie die Zugabe der Monomeren begonnen und etwa eine halbe Stunde, nachdem die Zugabe der Monomeren beendet worden ist, beendet wird. Der Initiator wird vorzugsweise in konstanter Menge pro Zeiteinheit- zugegeben. Nach Beendigung der Initiatorzugabe wird das Reaktionsgemisch noch so lange (in der Regel 1 bis 6 Stunden) auf Polymerisationstemperatur gehalten, bis alle eingesetzten Monomere (a) im wesentlichen vollständig umgesetzt worden sind. "im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.

Als Reaktoren für die Copolymerisation kommen die üblichen und bekannten Rührkessel, Rührkesselkaskaden, Rohrreaktoren, Schlaufenreaktoren oder Taylorreaktoren, wie sie beispielsweise in der Patentschrift DE 1 071 241 B1, den Patentanmeldungen EP 0 498 583 A1 oder DE 198 28 742 A1 oder in dem Artikel von K. Kataoka in Chemical Engineering Science, Band 50, Heft 9, 1995, Seiten 1409 bis 1416, beschrieben werden, in Betracht.

Hinsichtlich der Molekulargewichtsverteilung ist das (Meth)Acrylatcopolymerisat (I A) keinerlei Beschränkungen unterworfen. Vorteilhafterweise wird aber die Copolymerisation so geführt, daß eine Molekulargewichtsverteilung Mw/Mn, gemessen mit Hilfe der Gelpermeationschromatographie unter Verwendung von Polystyrol als Standard, von $\leq 4$, bevorzugt $\leq 2$ und insbesondere $\leq 1,5$ sowie in einzelnen Fällen auch $\leq 1,3$ resultiert.

Der Gehalt der Partikel (II) an den vorstehend beschriebenen Bindemitteln (I A) kann breit variieren und richtet sich nach den Erfordernissen des Einzelfalls. Wesentlich ist hierbei die Funktionalität des Bindemittels (I A) hinsichtlich der thermischen Vernetzung, d. h., die Anzahl der in dem Bindemittelgemisch (I A) enthaltenen isocyanatreaktiven Gruppen. Der Fachmann kann daher den Gehalt aufgrund seines allgemeinen Fachwissens gegebenenfalls mit Hilfe einfacher orientierender Versuche leicht ermitteln. Vorzugsweise liegt der Gehalt, bezogen auf die Partikel (I), bei 10 bis 80, bevorzugt 15 bis 75, besonders bevorzugt 20 bis 70, ganz besonders bevorzugt 25 bis 65 und insbesondere 30 bis 60 Gew.%.

Die Partikeln (I) enthalten außerdem mindestens ein blockiertes Polyisocyanat (I B).

Als blockierte Polyisocyanate (I B) können alle blockierte Polyisocyanate angewandt werden, wie sie beispielsweise in den deutschen Patentanmeldungen DE 196 17 086 A1 oder DE 196 31 269 A1, in den europäischen Patentanmeldungen EP 0 004 571 A1 oder EP 0 582 051 A1 oder in dem amerikanischen Patent US 4, 444,954 A beschrieben werden.

Es ist von Vorteil, wenn die blockierten Polyisocyanate (I B) mindestens ein weiches, flexibilisierendes Segment aufweisen, das als Bestandteil oder Baustein dreidimensionaler polymerer Netzwerke deren Glasübergangstemperatur Tg erniedrigt.

Die weichen, flexibilisierenden Segmente sind zweibindige organische Reste.

Beispiele geeigneter weicher, flexibilisierender, zweibindiger organischer Reste sind substituierte oder unsubstituierte, bevorzugt unsubstituierte, lineare oder verzweigte, vorzugsweise lineare, Alkandiyl-Reste mit 4 bis 30, bevorzugt 5 bis 20 und insbesondere 6 Kohlenstoffatomen, die innerhalb der Kohlenstoffkette auch cyclische Gruppen enthalten können.

Beispiele gut geeigneter linearer Alkandiyl-Reste sind Tetramethylen, Pentamethylen, Hexamethylen, Heptamethylen, Octamethylen, Nonan-1,9-diyl, Decan-1,10-diyl, Undecan-1,11-diyl Dodecan-1,12-diyl, Tridecan-1,13-diyi, Tetradecan-1,14-diyl, Pentadecan-1,15-diyl, - Hexadecan-1,16-diyl, Heptadecan-1,17-diyl, Octadecan-1,18-diyl, Nonadecan-1,19-diyl oder Eicosan-1,20-diyl, bevorzugt Tetramethylen, Pentamethylen, Hexamethylen, Heptamethylen, Octamethylen, Nonan-1,9-diyl, Decan-1,10-diyl, insbesondere Hexamethylen.

Beispiele gut geeigneter Alkandiyl-Reste, die in der Kohlenstoffkette auch cyclische Gruppen enthalten, sind 2-Heptyl-1-pentyl-cyclohexan-3,4-bis(non-9-yl), Cyclohexan-1,2-, -1,4- oder -1,3-bis(methyl), Cyclohexan-1,2-, 1,4- oder -1,3-bis(eth-2-yl), Cyclohexan-1,3-bis(prop-3-yl) oder Cyclohexan-1,2-, 1,4- oder 1,3-bis(but-4-yl).

Weitere Beispiele geeigneter zweibindiger organischer Reste sind zweiwertige Polyesterreste mit wiederkehrenden Polyesteranteilen der Formel -(-CO-(CHR$^1$)$_m$- CH$_2$-O-)- aus. Hierbei ist der Index m bevorzugt 4 bis 6 und der Substitutent R$^1$ = Wasserstoff, ein Alkyl-, Cycloalkyl- oder Alkoxy-Rest. Kein Substituent enthält mehr als 12 Kohlenstoffatome.

Weitere Beispiele geeigneter zweibindiger organischer Reste sind zweiwertige lineare Polyetherreste, vorzugsweise mit einem zahlenmittleren Molukulargewicht von 400 bis 5.000, insbesondere von 400 bis 3.000. Gut geeignete Polyetherreste haben die allgemeine Formel -(-O-(CHR$^2$)$_o$-)$_p$O-, wobei der Substituent R$^2$ = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist. Als besonders gut geeignete Beispiele werden lineare oder verzweigte Polyetherreste, die sich von Poly(oxyethylen)glykolen, Poly(oxypropylen)glykolen und Poly(oxybutylen)glykolen ableiten, genannt.

Des weiteren kommen auch lineare zweibindige Siloxanereste, wie sie beispielsweise in Siliconkautschuken vorliegen, hydrierte Polybutadien-oder Polyisoprenreste, statistische oder alternierende Butadien-Isopren-Copolymerisatreste oder Butadien-Isopren-Pfropfmischpolymerisatreste, die noch Styrol einpolymerisiert enthalten können, sowie Ethylen-Propylen-Dienreste in Betracht.

Als Substituenten Kommen alle organischen funktionellen Gruppen in Betracht, welche im wesentlichen inert sind, d. h., daß sie keine Reaktionen mit den Bestandteilen der neuen Dual-Cure-Pulverslurries eingehen.

Beispiele geeigneter inerter organischer Reste sind Alkylgruppen, insbesondere Methylgruppen, Halogenatome, Nitrogruppen, Nitrilgruppen oder Alkoxygruppen.

Von den vorstehend beschriebenen zweibindigen organischen Resten sind die Alkandiyl-Reste, die keine cyclischen Gruppen in der Kohlenstoffkette enthalten, von Vorteil und werden deshalb bevorzugt verwendet.

In den blockierten Polyisocyanaten (I B) kann nur eine Art der vorstehend beschriebenen weichen, flexibilisierenden, zweibindigen organischen Reste vorliegen. Es können aber auch mindestens zwei unterschiedliche zweibindige organische Reste verwendet werden.

Beispiele gut geeigneter Polyisocyanate, die zur Herstellung der blockierten Polyisocyanate (B) geeignet sind, sind acyclische aliphatische Diisocyanate wie Trimethylendiisocyanat, Tetramethylendiisocyanat, Pentamethylendiisocyanat, Hexamethylendiisocyanat, Heptamethylendiisocyanat, Ethylethylendiisocyanat, Trimethylhexandiisocyanat oder acyclische aliphatische Diisocyanate, die eine cyclische Gruppen in ihrer Kohlenstoffkette enthalten, wie Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-1,4-oder 1,3-Bis(4-isocyanatobut-1-yl)cyclohexan. Letztere sind im Rahmen der vorliegenden Erfindung aufgrund ihrer beiden aussschließlich an Alkylgruppen gebundenen Isocyanatgruppen trotz ihrer cyclischen Gruppen zu den acyclischen aliphatischen Diisocyanaten zu zählen.

Von diesen acyclischen aliphatischen Diisocyanaten sind diejenigen von besonderem Vorteil, die keine cyclischen Gruppen in ihrer Kohlenstoffkette enthalten. Von diesen ist wiederum Hexamethylendiisocyanat ganz besonders vorteilhaft und wird deshalb ganz besonders bevorzugt verwendet.

Weitere Beispiele geeigneter Polyisocyanate, die zur Herstellung von blockierten Polyisocyanaten (I B) geeignet sind, sind die Oligomeren der vorstehend genannten Diisocyanate, insbesondere von Hexamethylendiisocyanat, die Isocyanurat-, Harnstoff-, Urethan-, Biuret-, Uretdion-, Iminooxadiazindion, Carbodiimid- und/oder Allophanatgruppen enthalten. Beispiele geeigneter Herstellungsverfahren sind aus den Patentschriften CA 2,163,591 A, US 4,419,513 A, US 4,454,317 A, EP 0 646 608 A, US 4,801,675 A, EP 0 183 976 A1, DE 40 15 155 A1, EP 0 303 150 A1, EP 0 496 208 A1, EP 0 524 500 A1, EP 0 566 037 A1, US 5,258,482 A1, US 5,290,902 A1, EP 0 649 806 A1, DE 42 29 183 A1 oder EP 0 531 820 A1 bekannt oder sie werden in der nicht vorveröffentlichten deutschen Patentanmeldung DE 100 05 228.2 beschrieben.

Außerdem kommen die hochviskosen Polyisocyanate, wie sie in der deutschen Patentanmeldung DE 198 28 935 A1 beschrieben werden, oder die an ihrer Oberfläche durch Hamstoffbildung und/oder Blockierung desaktivierten Polyisocyanatspartikel gemäß den europäischen Patentanmeldungen EP 0 922 720 A1, EP 1 013 690 A1 und EP 1 029 879 A1 in Betracht.

Desweiteren kommen die in der deutschen Patentanmeldung DE 196 09 617 A1 beschriebenen Addukte von Polyisocyanaten mit isocyanatreaktiven funktionellen Gruppen enthaltenden Dioxanen, Dioxolanen und Oxazolidinen, die noch freie Isocyanatgruppen enthalten, als Polyisocyanate in Betracht.

Beispiele für geeignete Blockierungsmittel zur Herstellung der blockierten Polyisocyanate (I B) sind die aus der US-Patentschrift US 4,444,954 A oder US 5,972,189 A bekannten Blockierungsmittel, wie

i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;

ii) Lactame, wie ε-Caprolactam, δ-Valerolactam, γ-Butyrolactam oder β-Propiolactam;

iii) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonopropylether Ethylenglykolmonobutylether, Diethylenglykolmonomethylether, Diethylenglykolmonoethylether, Diethylenglykolmonopropylether, Diethylenglykolmonobutylether Propylenglykolmonomethylether, Methoxymethanol, 2-(-Hydroxyethoxy)phenol, 2-(Hydroxypropoxy)phenol, Glykolsäure, Glykolsäureester, Milchsäure, Milchsäureester, Methylolhamstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;

iv) Mercaptane wie Butylmercaptan, Hexylmercaptan, t-Butylmercaptan, t-Dodecylmercaptan,- 2-Mercaptobenzothiazol, Thiophenol, Methylthiophenol oder Ethylthiophenol;

v) Säureamide wie Acetoanilid, Acetoanisidinamid, Acrylamid, Methacrylamid, Essigsäureamid, Stearinsäureamid oder Benzamid;

vi) Imide wie Succinimid, Phthalimid oder Maleimid;

vii) Amine wie Diphenylamin, Phenylnaphthylamin, Xylidin, N-Phenylxylidin, Carbazol, Anilin, Naphthylamin, Butylamin, Dibutylamin oder Butylphenylamin;

viii) Imidazole wie Imidazol oder 2-Ethylimidazol;

ix) Harnstoffe wie Harnstoff, Thioharnstoff, Ethylenharnstoff, Ethylenthioharnstoff oder 1,3-Diphenylharnstoff;

x) Carbamate wie N-Phenylcarbamidsäurephenylester oder 2-Oxazolidon;

xi) Imine wie Ethylenimin;

xii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;

xiii) Salze der schwefeligen Säure wie Natriumbisulfit oder Kaliumbisulfit;

xiv) Hydroxamsäureester wie Benzylmethacrylohydroxamat (BMH) oder Allylmethacrylohydroxamat; oder

xv) substituierte Pyrazole, Ketoxime, Imidazole oder Triazole; sowie

xvi) Gemische dieser Blockierungsmittel, insbesondere Dimethylpyrazol und Triazole, Dimethylpyrazol und Succinimid oder Butyldiglykol und Trimethylolpropan.

Der Gehalt der Partikel (I) an blockierten Polyisocyanaten (I B) kann breit variieren und richtet sich vor allem nach der Funktionalität der Bindemittel (I A) bezüglich der thermischen Härtung, d. h. der Anzahl der hierin enthaltenen isocyanatreaktiven funktionellen Gruppen. Der Fachmann kann daher im Einzelfall den optimalen Gehalt anhand seines allgemeinen Fachwissens gegebenenfalls unter Zuhilfenahme einfacher Vorversuche leicht ermitteln. Vorzugsweise liegt der Gehalt an blockierten Polyisocyanaten (I B), jeweils bezogen auf die Partikel (I), bei 10 bis 70, bevorzugt 12 bis 65, besonders bevorzugt 26 bis 60, ganz besonders bevorzugt 18 bis 55 und insbesondere 20 bis 50 Gew.-%.

Zu Zwecken der Herstellung der neuen wäßrigen Dual-Cure-Dispersionen liegen die Partikel (I) in einer wäßrigen Dispersion (I), einer wäßrigen Emulsion (I) und/oder einer Pulverslurry (I), insbesondere einer Pulverslurry (I), vor.

Der Festkörpergehalt der Pulverslurry (I) kann sehr breit variieren. Vorzugsweise liegt der Gehalt bei 10 bis 80, bevorzugt 12 bis 75, besonders bevorzugt 14 bis 70, ganz besonders bevorzugt 16 bis 65 und insbesondere 18 bis 60 Gew.-%, jeweils bezogen auf die Pulverslurry (I).

Die Herstellung der Pulverslurries (I) aus den vorstehend beschriebenen Bestandteilen weist keine methodischen Besonderheiten auf, sondern erfolgt im wesentlichen wie in den Patentanmeldungen DE 195 40 977 A1, DE 195 18 392 A1, DE 196 17 086 A1, DE-A-196 13 547, DE 196 18 657 A1, DE 196 52 813 A1, DE 196 17 086 A1, DE-A-198 14 471 A1, DE 198 41 842 A1 oder DE .198 41 408 A1 im Detail beschrieben, nur daß im Rahmen der vorliegenden Erfindung noch die nachstehend beschriebenen Pigmente und/oder Füllstoffe (IV) mitverarbeitet werden können.

In einer ersten bevorzugten Variante der Herstellung wird von einem pigmentierten Pulverlack ausgegangen, der wie in der Produkt-Information der Firma BASF Lacke + Farben AG, "Pulverlacke", 1990 oder der Firmenschrift von BASF Coatings AG "Pulverlacke, Pulverlacke für industrielle Anwendungen", Januar 2000, durch Homogenisieren und Dispergieren, beispielsweise mittels eines Extruders oder Schneckenkneters, und Vermahlen hergestellt wird. Nach Herstellung der Pulverlacke werden diese durch weiteres Vermahlen und ggf. durch Sichten und Sieben für die Dispergierung vorbereitet.

Aus dem Pulverlack kann anschließend durch Naßvermahlung oder durch Einrühren von trocken vermahlenem Pulverlack die wäßrige Pulverlack-Dispersion hergestellt werden. Besonders bevorzugt wird die Naßvermahlung. Anschließend wird die Pulverslurry (I) vor ihrer weiteren Verarbeitung filtriert.

Es ist von Vorteil, die Pulverslurries (I) mit Hilfe des in der deutschen Patentanmeldung DE 199 08 018 A1, Seite 15, Seite 37 bis 65, oder der deutschen Patentanmeldung DE 199 08 013 A1, Spalte 4, Zeile 22 bis 40, und Spalte 12, Zeile 38, bis Spalte 13, Zeile 23, beschriebenen Sekundärdispersionsverfahren herzustellen.

Die Partikel (I) der Pulverslurries (I) können im nassen Zustand noch mechanisch zerkleinert werden, was als Naßvermahlung bezeichnet wird. Vorzugsweise werden hierbei Bedingungen angewandt, daß die Temperatur des Mahlguts 70, bevorzugt 60 und insbesondere 50°C nicht überschreitet. Vorzugsweise beträgt der spezifische Energieeintrag während des Mahlprozesses 10 bis 1.000, bevorzugt 15 bis 750 und insbesondere 20 bis 500 Wh/g.

Für die Naßvermahlung können die unterschiedlichsten Vorrichtungen angewandt werden, die hohe oder niedrige Scherfelder erzeugen.

Beispiele geeigneter Vorrichtungen, die niedrige Scherfelder erzeugen, sind übliche und bekannte Rührkessel, Spalthomogenisatoren, Microfluidizer oder Dissolver.

Beispiele geeigneter Vorrichtungen, die hohe Scherfelder erzeugen, sind übliche und bekannte Rührwerksmühlen oder Inline-Dissolver.

Besonders bevorzugt werden die Vorrichtungen, die hohe Scherfelder erzeugen, angewandt. Von diesen sind die Rührwerksmühlen erfindungsgemäß besonders vorteilhaft und werden deshalb ganz besonders bevorzugt verwendet.

Generell wird bei der Naßvermahlung die Pulverslurry (I) mit Hilfe geeigneter Vorrichtungen, wie Pumpen, den vorstehend beschriebenen Vorrichtungen zugeführt und im Kreis hierüber gefahren, bis die gewünschte Teilchengröße erreicht ist.

Aus energetischen Gründen ist es insbesondere von Vorteil, wenn die zu vermahlende Pulverslurry (I) nur einen Teil, vorzugsweise 5 bis 90, bevorzugt 10 bis 80 und insbesondere 20 bis 70 Gew.-% der in ihr enthaltenen, nachstehend beschriebenen Verdicker (IV) enthält. Sofern diese Variante des bevorzugten Verfahrens angewandt wird; ist die restliche Menge an Verdicker (IV) nach der Naßvermahlung zuzusetzen.

Vorzugsweise wird die Herstellung der Pulverslurries (I) unter Ausschluß von aktinischer Strahlung durchgeführt, um eine vorzeitige Vernetzung oder anderweitige Schädigung der Pulverslurries (I) zu vermeiden.

Der weitere wesentliche Bestandteil der neuen Dual-Cure-Pulverslurries sind die Partikel (II).

Der wesentliche Bestandteil der Partikel (II) ist mindestens ein Polyurethan (II), das mindestens eine isocyanatreaktive funktionelle Gruppe, mindestens eine funktionelle Gruppe mit mindestens einer durch aktinische Strahlung aktivierbaren Bindung und mindestens eine dispergierende Gruppen enthält (3-in-1-System).

Vorzugsweise enthalten die Partikel (II) noch blockierte Isocyanatgruppen.

Die blockierten Isocyanatgruppen können in der Form von separaten blockierten Polyisocyanaten vorliegen. Diese Ausführungsform ist bevorzugt, wenn die Polyurethane (II) als 3-in-1-Systeme vorliegen. Beispiele geeigneter blockierter Polyisocyanate sind die vorstehend beschriebenen.

Die blockierten Isocyanatgruppen können aber auch an das Polyurethan (II) gebunden sein (4-in-1-System).

Es können Gemische aus 3-in-1-und 4-in-1-Systemen (II) eingesetzt werden; vorzugsweise werden indes 4-in-1-Systeme (II), denen gegebenenfalls noch zusätzliche blockierte Polyisocyanate zugesetzt werden können, eingesetzt.

Die Polyurethane (II) können nach den üblichen und bekannten Methoden der Polyurethanchemie synthetisiert werden. Vorzugsweise werden sie aber aufgebaut aus

(II A) mindestens einem aliphatischen Polyisocyanat mit einer Isocyanatfunktionalität von 2,0 bis 6,0,

(II B) mindestens einer Verbindung mit mindestens einer isocyanatreaktiven funktionellen Gruppe sowie mindestens einer mit aktinischer Strahlung aktivierbaren Bindung,

(II C) mindestens einer niedermolekularen aliphatischen Verbindung mit mindestens zwei isocyanatreaktiven funktionellen Gruppen,

(II D) mindestens einer Verbindung mit mindestens einer isocyanatreaktiven funktionellen Gruppe und mindestens einer dispergierenden funktionellen Gruppe,

(II E) mindestens einem Neutralisationsmittel für die dispergierenden funktionellen Gruppen der Verbindung D) sowie gegebenenfalls

(II G) mindestens einer von den Verbindungen B) bis E) verschiedenen Verbindung mit einer isocyanatreaktiven funktionellen Gruppe.

wobei die blockierten Isocyanatgruppen in die Polyurethane (II)

1. im Falle des 3-in-1-Systems durch Zugabe mindestens eines blockierten Polyisocyanats (II H) vor, während und/oder nach der Herstellung des Polyurethans (II) oder

2. im Falle des 4-in-1-Systems über die Umsetzung von mindestens einem Blockierungsmittel (II F) für Isocyanatgruppen und/oder mindestens einer Verbindung (II F) mit mindestens einer blockierten Isocyanatgruppe und einer isocyanatreaktiven Gruppe mit den isocyanatgruppenhaltigen Polyurethanpräpolymeren, die aus der Umsetzung eines stöchiometrischen Überschusses der Verbindungen (II A) mit den Verbindungen (II B) sowie gegebenenfalls (II C) und (II G) sowie mit einer zur Dispergierbarkeit in wäßrigen Medien ausreichenden Menge an Verbindungen (II D) und (II E) resultieren,

eingeführt werden können.

Die Polyurethane (II) sind somit selbstvernetzend und/oder fremdvernetzend (vgl. Römpp Lexikon Lacke und Druckfarben, Georg Thieme Verlag, Stuttgart, New York, 1998, Seiten 274 bis 276, »Härtung«).

Hier und im folgenden wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff Stickstoff-, Kohlenstoff Phosphor- oder Kohlenstoff-Silizium-Einzelbiwdungen-oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Besonders gut geeignete Doppelbindungen sind beispielsweise in (Meth)acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen enthalten. Von diesen bieten die Acrylatgruppen ganz besondere Vorteile, weswegen sie erfindungsgemäß ganz besonders bevorzugt verwendet werden.

Beispiele geeigneter isocyanatreaktiver funktioneller Gruppen sind die vorstehend beschriebenen.

Vorzugsweise sind die Isocyanatgruppen mit den aus der US-Patentschrift US 4,444,954 A bekannten Blokkierungsmitteln (II F) blockiert. Beispiele geeigneter Blockierungsmittel (II F) sind die vorstehend beschriebenen.

Beispiele geeigneter dispergierender funktioneller Gruppen sind (potentiell) anionische Gruppen wie Carbonsäure-, Sulfonsäure- oder Phosphonsäuregruppen, insbesondere Carbonsäuregruppen. Sie sind in der Dispersion (II) in einer Menge vorhanden, daß eine Säurezahl von 5,0 bis 100, vorzugsweise 6,0 bis 90, bevorzugt 7,0 bis 80, besonders bevorzugt 8,0 bis 70, ganz besonders bevorzugt 9,0 bis 60 und insbesondere 10 bis 50, mg KOH/g Dispersion (II) resultiert.

Beispiele geeigneter Polyisocyanate (II A) sind die vorstehend beschriebenen Polyisocyanate, sie für die Herstellung der blockierten Polyisocyanaten (I B) verwendet werden, oder die nachstehend beschriebenen Polyisocyanate, wie sie für die Herstellung der Urethan(meth)acrylate (III) verwendet werden.

Beispiele geeigneter Verbindungen (II B) mit mindestens einer, insbesondere einer, funktionellen Gruppe sowie mindestens einer mit aktinischer Strahlung aktivierbaren Bindung pro Molekül sind

- Allylalkohol oder 4-Butylvinylether;

- Hydroxyalkylester der Acrylsäure oder der Methacrylsäure, insbesondere der Acrylsäure, die durch Veresterung aliphatischer Diole, beispielsweise der vorstehend beschriebenen niedermolekularen Diole (II C), mit Acrylsäure oder Methacrylsäure oder durch Umsetzung von Acrylsäure oder Methacrylsäure mit einem Alkylenoxid erhältlich sind, insbesondere Hydroxyalkylester der Acrylsäure oder Methacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutyl-, Bis(hydroxymethyl)cyclohexanacrylat oder -methacrylat; von diesen sind 2-Hydroxyethylacrylat und 4-Hydroxybutylacrylat besonders vorteilhaft und werden deshalb erfindungsgemäß besonders bevorzugt verwendet; oder

- Umsetzungsprodukte aus cyclischen Estern, wie z.B. epsilon-Caprolacton, und diesen Hydroxyalkyl- oder -cycloalkylestern.

Beispiele geeigneter niedermolekularer aliphatischer Verbindungen (II C) mit mindestens zwei, insbesondere zwei, isocyanatreaktiven funktionellen Gruppen sind Polyole, insbesondere Diole, Polyamine, insbesondere Diamine, und Aminoalkohole. Üblicherweise werden die Polyole und/oder Polyamine neben den Diolen und/oder Diaminen in untergeordneten Mengen verwendet, um Verzweigungen in die Polyurethane einzuführen. Im Rahmen der vorliegenden Erfindung sind unter untergeordneten Mengen Mengen zu verstehen, die kein Gelieren der Polyurethane bei ihrer Herstellung bewirken. Für die Aminoalkohole gilt dies sinngemäß

Beispiele geeigneter Diole (II C) sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol, die stellungsisomeren Diethyloctandiole, 2-Butyl-2-ethylpropandiol-1,3, 2-Butyl-2-methylpropan-diol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3, 2-Cyclo-hexyl-2-methylpropandiol-1,3, 2,5-Dimethyl-hexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, Dihydroxymethylcyclohexan, Bis(hydroxycyclohexyl)propan, Tetramethylcyclobutandiol, Cyclooctandiol oder Norbonandiol.

Beispiele geeigneter Polyole (II C) sind Trimethylolethah, Trimethylolpropan oder Glycerin, Pentaerythrit oder Homopentaerythrit oder Zuckeralkohole wie Threit oder Erythrit oder Pentite wie Arabit, Adonit oder Xylit oder Hexite wie Sorbit, Mannit oder Dulcit.

Beispiele geeigneter Diamine (II C) sind Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Methandiamin, Isophorondiamin oder 4,4'-Diaminodicyclohexylmethan.

Beispiele geeigneter Polyamine (II C) sind Diethylentriamin, Triethylentetramin, Dipropylendiamin und Dibutylentriamin.

Beispiele geeigneter Aminoalkohole (II C) sind Ethanolamin, Diethanolamin oder Triethanolamin.

Von diesen Verbindungen (II C) bietet Diethanolamin besondere Vorteile und wird deshalb erfindungsgemäß bevorzugt verwendet.

Beispiele geeigneter Verbindungen (II D) mit mindestens einer isocyanatreaktiven funktionellen Gruppe und mindestens einer dispergierenden funktionellen Gruppe, insbesondere einer (potentiell) anionischen Gruppe, sind Mercapto-, Hydroxy-, Amino- oder Iminocarbonsäuren, -phosphonsäuren oder -sulfonsäuren wie Mercaptoessigsäure (Thioglykolsäure), Mercaptopropionsäure, Mercaptobernsteinsäure, Hydroxyessigsäure, Hydroxydecansäure, Hydroxydodecansäure, 12-Hydroxystearinsäure, Hydroxyethansulfonsäure, Hydroxypropansulfonsäure, Mercaptoethansulfonsäure, Mercaptopropansulfonsäure, Aminopropansulfonsäure, Glycin, Iminodiessigsäure, 2,2-Dimethylolessigsäure, 2,2-Dimethylolpropionsäure, 2,2-Dimethylolbuttersäure, 2,2-Dimethylolpentansäure, 2,2-Diaminovaleriansäure, 3,4-Diaminobenzoesäure, 2,4-Diaminotoluolsulfonsäure oder 2,4-Diamino-diphenylethersulfonsäure. Sie werden in Mengen verwendet, daß die vorstehend beschriebenen Säurezahlen resultieren.

Beispiele für geeignete Neutralisationsmittel (II E) für die potentiell anionischen Gruppen der Verbindung (II D) sind die vorstehend beschriebenen. Vorzugsweise werden die Neutralisationsmittel in einer Menge angewandt, daß ein Neutralisationsgrad von 10 bis 150, bevorzugt 20 bis 145 und insbesondere 30 bis 140% resultiert.

Beispiele geeigneter Verbindungen (II G), die von den Verbindungen (II B) bis (II F) verschieden sind und eine isocyanatreaktive funktionelle Gruppe aufweisen, sind Ethanol, Propanol, n-Butanol, sec.-Butanol, tert.-Butanol, Amylalkohole, Hexanole, Fettalkohole, Phenol, Allylalkohol oder Ethylhexylamin. Sie werden vorzugsweise i. V. m. höherfunktionellen Verbindungen (II C) verwendet, insbesondere um das Gelieren der Polyurethane (II) bei ihrer Herstellung zu vermeiden.

Die Herstellung des Polyurethans (II) kann so gesteuert werden, daß flüssige Partikel (II) resultieren. Die Teilchengröße der flüssigen Partikel (II) kann über den Gehalt an Säuregruppen gesteuert werden und breit variieren. Vorzugsweise liegen die Teilchengrößen bei 50 bis 1.000 nm, bevorzugt 100 bis 900, besonders bevorzugt 150 bis 800, ganz besonders bevorzugt 200 bis 700 und insbesondere 250 bis 600 nm.

Vorzugsweise wird aber die Auswahl der vorstehend beschriebenen Ausgangsprodukte, insbesondere der Ausgangsprodukte (II D) und (II A), nach Art und Menge so getroffen werden, daß über die Variation von Glasübergangstemperatur und/oder Säurezahl der Polyurethane (II) hochviskose und/oder feste, insbesondere feste, Partikel (II) resultieren.

Zu Zwecken der Herstellung der neuen wäßrigen Dual-Cure-Dispersionen liegen die Partikel (II) in der Form einer wäßrigen Dispersion (II), einer wäßrigen Emulsion (II) und/oder einer Pulverslurry (II), insbesondere einer Pulverslurry (II), vor.

Methodisch gesehen weist die Herstellung der Pulverslurries (II) aus den vorstehend beschriebenen Ausgangsprodukten keine Besonderheiten auf, sondern erfolgt nach den üblichen und bekannten Methoden der Herstellung wäßriger Polyurethandispersionen.

So wird beispielsweise in einer bevorzugten Verfahrensweise in einem ersten Verfahrenschritt mindestens eine Verbindung (II B) mit einem molaren Überschuß mindestens einer Verbindung (II A) zu einem Addukt umgesetzt, das mit aktinischer Strahlung aktivierbare Bindungen und freie Isocyanatgruppen enthält. Das Addukt wird in einem zweiten Verfahrenschritt mit mindestens einer Verbindung (II D) und mindestens einer Verbindung (II C) zu einem Isocyanatgruppen enthaltenden Präpolymeren oder einem isocyantgruppenfreien Polyurethan (II) umgesetzt. In einem weiteren Verfahrenschritt wird mindestens ein Neutralisationsmittel (II E) sowie gegebenenfalls mindestens eine Verbindung (II G) zugesetzt, so daß ein partiell oder vollständig neutralisiertes Polyurethan (II) oder isocyantgruppenhaltiges Präpolymer resultiert. Die freien Isocyanatgruppen des Präpolymeren werden vorzugsweise mit mindestens einer Verbindung (II G) und/oder (II C) umgesetzt, wodurch ein gegebenenfalls kettenverlängertes Polyurethan (II) gebildet wird. Vor, während und/oder nach diesem Verfahren wird mindestens ein blockiertes Polyisocyanat zugesetzt. Das Polyurethan (II) und/oder das Gemisch aus Polyurethan (II) und blockiertem Polyisocyanat wird oder werden in ein wäßriges Medium überführt, wodurch die Pulverslurry (II) resultiert. Ist dem Polyurethan (II) vor seiner Dispergierung kein blokkiertes Polyisocyanat zugesetzt worden, wird dies nach seiner Dispergierung nachgeholt.

In einer bevorzugten Verfahrensweise wird das nach dem vorstehend beschriebenen Verfahren erhaltene neutralisierte Präpolymer mit einem Blockierungsmittel (II F) oder einer Verbindung (II F) umgesetzt. Sollten hiernach noch freie Isocyanatgruppen vorhanden sein, werden sie vorzugsweise mit mindestens einer Verbindung (II G) und/oder (II C) umgesetzt, wodurch ein gegebenenfalls kettenverlängertes Polyurethan (II) gebildet wird. Das Polyurethan (II) wird in ein wäßriges Medium überführt, wodurch die Pulverslurry (II) resultiert. Wird noch ein blockiertes Polyisocyanat zugesetzt, entsteht eine selbstvernetzende und fremdvernetzende Pulverslurry (II).

Das wäßrige Medium enthält im wesentlichen Wasser. Hierbei kann das wäßrige Medium in untergeordneten Mengen sonstige gelöste feste, flüssige oder gasförmige organische und/oder anorganische, nieder-und/oder hochmolekulare Stoffe enthalten. Im Rahmen der vorliegenden Erfindung ist unter dem Begriff "untergeordnete Menge" eine Menge zu verstehen, welche den wäßrigen Charakter des wäßrigen Mediums nicht aufhebt. Bei dem wäßrigen Medium kann es sich aber auch um reines Wasser handeln.

Die Pulverslurries (II) können noch der vorstehend bei den Pulverslurries (I) beschriebenen Naßvermahlung und Filtration unterzogen werden.

Die Partikel (II) sind in den Pulverslurries (II) vorzugsweise in einer Menge von, bezogen auf die Pulverslurry (II), 5 bis 80, bevorzugt 10 bis 70, besonders bevorzugt 15 bis 60, ganz besonders bevorzugt 20 bis 50 und insbesondere 25 bis 45 Gew.-% enthalten.

Außerdem enthalten die neuen Dual-Cure-Pulverslurries mindestens einen olefinisch ungesättigten Bestandteil (III) als dritten wesentlichen Bestandteil. Der olefinisch ungesättigte Bestandteil (III) kann in den neuen Dual-Cure-Pulverslurries in der kontinuierlichen Phase, d. h. dem wäßrigen Medium, den Partikeln (I) und/oder den Partikeln (II) vorliegen.

Der olefinisch ungesättigte Bestandteil (III) ist bis auf ggf. vorhandene technisch bedingte Spuren frei von isocyanatreaktiven funktionellen Gruppen. Er enthält im statistischen Mittel mehr als eine, vorzugsweise mehr als zwei, bevorzugt mehr als drei besonders bevorzugt mehr als vier, ganz besonders bevorzugt mindestens fünf und insbesondere sechs mit aktinischer Strahlung aktivierbare Kohlenstoff-Kohlenstoff-Doppelbindungen im Molekül. Die Kohlenstoff-Kohlenstoff-Doppelbindungen bewirken nach ihrer Aktivierung mit aktinischer Strahlung die Dimerisierung, Oligomerisierung oder die Polymerisation der betreffenden olefinisch ungesättigten Gruppen.

Gut geeignete Kohlenstoff-Kohlenstoff-Doppelbindungen liegen beispielsweise in (Meth)Acryloyl-, Ethacryloyl-, Crotonat-, Cinnamat-, Vinylether-, Vinylester-, Ethenylarylen-, Dicyclopentadienyl-, Norbornenyl-, Isoprenyl-, Isoprenyl-, Isopropenyl-, Allyl- oder Butenylgruppen; Ethenylarylen-, Dicyclopentadienyl-, Norbornenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen vor. Von diesen sind (Meth)Acryloylgruppen, insbesondere Acryloylgruppen, von besonderem Vorteil und werden deshalb erfindungsgemäß ganz besonders bevorzugt verwendet.

Bei dem erfindungsgemäß bevorzugt verwendeten olefinisch ungesättigten Bestandteilen (III) handelt es sich demnach um (Meth)Acrylate.

Beispiele geeigneter (Meth)Acrylate (III) sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate. Von diesen sind die Urethan(meth)acrylate (III) vorteilhaft und werden deshalb besonders bevorzugt verwendet.

Vorzugsweise enthält der olefinisch ungesättigte Bestandteil (III), insbesondere das Urethan(meth)acrylat (III), mindestens ein hartmachendes Segment als Molekülbaustein. Das hartmachende Segment erhöht als Bestandteil dreidimensionaler polymerer Netzwerke deren Glasübergangstemperatur Tg.

Die hartmachenden Segmente sind zwei- oder mehrbindige organische Reste. Vorzugsweise werden zweibindige organische Reste verwendet. Daneben können in untergeordneten Mengen mehrbindige, insbesondere dreibindige, organische Reste eingesetzt werden, durch die die Vernetzungsdichte beeinflußt werden kann.

Beispiele gut geeigneter hartmachender Segmente sind zweibindige aromatische, cycloaliphatische und aromatisch-cycloaliphatische Reste, bei denen innerhalb des olefinisch ungesättigten Bestandteils (III), insbesondere des Urethan(meth)acrylats (III), mindestens eine verknüpfende Bindung direkt zur cycloaliphatischen und/oder aromatischen Struktureinheit führt. Vorzugsweise führen beide verküpfenden Bindungen zu diesen Struktureinheiten.

Die zweibindigen cycloaliphatischen und aromatischen, insbesondere die cycloaliphatischen, Reste sind vorteilhaft und werden bevorzugt verwendet.

Beispiele geeigneter zweibindiger aromatischer Reste sind substituierte, insbesondere methylsubstituierte, oder unsubstituierte aromatische Reste mit 6 bis 30 Kohlenstoffatomen im Molekül, wie Phen-1,4-, -1,3- oder -1,2-ylen, Naphth-1,4-, -1,3-, -1,2-, -1,5- oder -2,5-ylen, Propan-2,2-di(phen-4'-yl), Methan-di(phen-4'-yl), Diphenyl-4,4'-diyl oder 2,4- oder 2,6-Toluylen.

Beispiele geeigneter zweibindiger cycloaliphatischer Reste -sind substituierte oder unsubstituierte, vorzugsweise unsubstituierte, Cycloalkandiyl-Reste mit 4 bis 20 Kohlenstoffatomen, wie Cyclobutan-1,3-diyl, Cyclopentan-1,3-diyl, Cyclohexan-1,3- oder -1,4-diyl, Cycloheptan-1,4-diyl, Norbornan-1,4-diyl, Adamantan-1,5-diyl, Decalin-diyl, 3,3,5-Trimethyl-cyclohexan-1,5-diyl, 1-Methylcyclohexan-2,6-diyl, Dicyclohexylmethan-4,4'-diyl, 1,1'-Dicyclohexan-4,4'-diyl oder 1,4-Dicyclohexylhexan-4,4"-diyl, insbesondere 3,3,5-Trimethyl-cyclohexan-1,5-diyl oder Dicyclohexylmethan-4,4'-diyl. Daneben können in untergeordneten Mengen die entsprechenden Triyl-Reste angewandt werden.

Beispiele geeigneter Substituenten sind die vorstehend beschriebenen.

Grundsätzlich sind die bevorzugt verwendeten Urethan(meth)acrylate (III) herstellbar durch Umsetzung eines Di- oder Polyisocyanates mit einem Kettenverlängerungsmittel aus der Gruppe der Diole/Polyole und/oder Diamine/Polyamine und/oder Dithiole/Polythiole und/oder Alkanolamine, wie sie vorstehend bei den Partikeln (II) beschrieben werden, und anschließende Umsetzung der restlichen freien Isocyanatgruppen mit mindestens einer Verbindung, enthaltend mindestens eine, insbesondere eine, der vorstehend beschriebenen isocyanatreaktiven Gruppen, insbesondere Hydroxylgruppen, sowie mindestens eine, insbesondere eine, Kohlenstoff-Kohlenstoff-Doppelbindung.

Gut geeignete Doppelbindungen liegen in den vorstehend beschriebenen olefinisch ungesättigten Gruppen vor. Von diesen sind (Meth)Acryloylgruppen, insbesondere Acryloylgruppen, von besonderem Vorteil und werden deshalb erfindungsgemäß ganz besonders bevorzugt verwendet.

Gut geeignete Verbindungen zur Einführung von Kohlenstoff-Kohlenstoff-Doppelbindungen sind die vorstehend beschriebenen Monomeren (a1) und (a2), insbesondere Acrylsäure und Methacrylsäure.

Die hartmachenden Segmente können sowohl über die Di- oder Polyisocyanate als auch über die Kettenverlängerungsmittel eingeführt werden.

Gut geeignete Di- und Polyisocyanate sind aromatische und cycloaliphatische, insbesondere cycloaliphatische, Di- und Polyisocyanate. Als aromatische und cycloaliphatische Di- und Polyisocyanate werden diejenigen Di- und Polyisocyanate angesehen, worin mindestens eine Isocyanatgruppe direkt an eine aromatische oder cycloaliphatische Struktureinheit gebunden ist.

Beispiele geeigneter cycloaliphatischer Di- oder Polyisocyanate zur Einführung der hartmachenden Segmente sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4-Diisocyanatocyclohexan Dicyclohexylmethan-2,4'-diisocyanat oder Dicyclohexylmethan-4,4'-diisocyanat, insbesondere Isophorondiisocyanat, sowie die Oligomeren dieser Diisocyanate, insbesondere von Isophorondiisocyanat, die Isocyanurat-, Harnstoff-, Urethan-, Biuret-, Uretdion-, Iminooxadiazindion-, Carbodiimid- und/oder Allophanatgruppen enthalten.

Beispiele geeigneter aromatischer Diisocyanate und Polyisocyanate sind 2,4- und 2,6-Toluylendiisocyanat, 1,2-, 1,3- oder 1,4-Phenylendiisocyanat, Naphthalin-1,4-, -1,3-, -1,2-, -1,5- oder -2,5-diisocyanat, Propan-2,2-di(phenyl-4'-diisocyanat), Methan-di(phenyl-4'-Isocyanaten) oder 1,1'-Diphenyl-4,4'-diisocyanat.

Beispiele geeigneter Kettenverlängerungsmittel zur Einführung hartmachender Segmente sind Cyclobutan-1,3-diol, Cyclopentan-1,3-diol, Cyclohexan-1,3- oder -1,4-diol, Cycloheptan-1,4-diol, Norbornan-1,4-diol, Adamantan-1,5-diol, Decalin-diol, 3,3,5-Trimethyl-cyclohexan-1,5-diol, 1-Methylcyclohexan-2,6-diol, Dicyclohexylmethan-4,4'-diol, 1,1'-Dicyclohexan-4,4'-diol oder 1,4-Dicyclohexylhexan-4,4"-diol, insbesondere 3,3,5-Trimethyl-cyclohexan-1,5-diol oder Dicyclohexylmethan-4,4'-diol.

Vorzugsweise werden die hartmachenden Segmente über die Di- und Polyisocyanate in die Urethan(meth) acrylate (III) eingebaut.

Beispiele geeigneter Kettenverlängerungsmittel, die keine hartmachenden Segmente enthalten, werden in der deutschen Patentanmeldung DE 199 14 896 A1, in der deutschen Patentanmeldung DE 44 21 823 A1, Seite 7, Zeile 65, bis Seite 8, Zeile 2 bis 45, und Seite 10, Zeilen 42 bis 48, oder in der europäischen Patentanmeldung EP 0 089 497, Seite 8, Zeile 17, bis Seite 9, Zeile 1, beschrieben.

Die Mengen an Kettenverlängerungsmitteln, Di- bzw. Polyisocyanaten und Verbindungen mit im statistischen Mittel mindestens einer isocyanatreaktiven Gruppe und mindestens einer Kohlenstoff-Kohlenstoff-Doppelbindung, insbesondere Hydroxyalkyl(meth)acrylate, werden dabei bevorzugt so gewählt, daß

1. das Äquivalentverhältnis der NCO-Gruppen zu den isocyanatreaktiven Gruppen des Kettenverlängerungsmittels zwischen 3 : 1 und 1 : 2, bevorzugt bei 2 : 1, liegt und

2. die isocyanatreaktiven Gruppen der Verbindungen mit im statistischen Mittel mindestens einer isocyanatreaktiven Gruppe und mindestens einer Kohlenstoff-Kohlenstoff-Doppelbindung im Molekül, insbesondere Hydroxyalkyl(meth)acrylate, in stöchiometrischer Menge in bezug auf die noch freien Isocyanatgruppen des Präpolymeren aus Isocyanat und Kettenverlängerungsmittel vorliegen.

Außerdem ist es möglich, die Urethan(meth)acrylate (III) herzustellen, indem zunächst ein Teil der Isocyanatgruppen eines Di- oder Polyisocyanats mit mindestens einer Verbindung mit mindestens einer isocyanatreaktiven Gruppe und mindestens einer Kohlenstoff-Kohlenstoff Doppelbindung im Molekül, insbesondere ein Hydroxyalkyl(meth)acrylat, umgesetzt wird und die restlichen Isocyanatgruppen anschließend mit einem Kettenverlängerungsmittel umgesetzt werden. Auch in diesem Fall werden die Mengen an Kettenverlängerungsmittel, Isocyanat und Verbindung so gewählt, daß das Äquivalentverhältnis der NCO-Gruppen zu den isocyanatreaktiven Gruppen des Kettenverlängerungsmittels zwischen 3:1 und 1 :2, bevorzugt bei 2:1 liegt und das Äquivalentverhältnis der restlichen NCO-Gruppen zu den isocyanatreaktiven Gruppen der Verbindung 1 : 1 beträgt. Selbstverständlich sind auch sämtliche Zwischenformen dieser beiden Verfahren möglich. Beispielsweise kann ein Teil der Isocyanatgruppen eines Diisocyanates zunächst mit einem Diol als Kettenverlängerungsmittel umgesetzt werden, anschließend kann ein weiterer Teil der Isocyanatgruppen mit der Verbindung, insbesondere dem Hydroxyalkyl(meth)acrylat, und im Anschluß hieran können die restlichen Isocyanatgruppen mit einem Diamin als Kettenverlängerungsmittel umgesetzt werden.

Diese verschiedenen Herstellverfahren der bevorzugt eingesetzten Urethan(meth)acrylate (III) sind beispielsweise aus der europäischen Patentanmeldung EP 0 204 161 A1 bekannt. Die Urethan(meth)acrylate (III) sind handelsübliche Verbindungen und werden beispielsweise unter der Marke Ebecryl®1290 von der Firma UCB, Belgien, vertrieben.

Der Gehalt der neuen Dual-Cure-Pulverslurries an den ungesättigten polyfunktionellen Urethanen (III) kann breit variieren und richtet sich nach den Erfordernissen des Einzelfalls, insbesondere nach der Vernetzungsdichte, die bei den aus den neuen Dual-Cure-Pulverslurries hergestellten erfindungsgemäßen Beschichtungen, Klebschichten und Dichtungen eingestellt werden soll. Vorzugsweise liegt der Gehalt, jeweils bezogen auf den Festkörper der neuen Dual-Cure-Pulverslurry, bei 1 bis 50, bevorzugt 2 bis 45, besonders bevorzugt 3 bis 40, ganz besonders bevorzugt 4 bis 35 und insbesondere 5 bis 30 Gew.-%.

Die neuen Dual-Cure-Pulverslurries können darüber hinaus noch mindestens einen Zusatzstoff (IV) enthalten. Der Zusatzstoff (IV) kann je nach seiner Funktionsweise in der kontinuierliche Phase, den Partikeln (I) und/oder den Partikeln (II) enthalten sein.

So können die neuen Dual-Cure-Pulverslurries pigmentiert und/oder gefüllt und/oder gefärbt sein.

In einer ersten bevorzugten Ausführungsform enthalten die Partikel (I) und/oder (II) der neuen pigmentierten Dual-Cure-Pulverslurries mindestens ein Pigment und/oder mindestens einen Füllstoff (IV); d.h., die Gesamtmenge der eingesetzten Pigmente und/oder Füllstoffe (IV) befinden sich in den Partikeln (I) und/oder (II).

In einer zweiten bevorzugten Ausführungsform enthalten die neuen pigmentierten Dual-Cure-Pulverslurries pigmentfreie Partikel (I) und/oder (II) und mindestens ein pulverförmiges Pigment (IV) und/oder mindestens einen pulverförmigen Füllstoff (IV); d.h., alle Pigmente liegen als separate feste Phase vor. Für deren Teilchengröße gilt das vorstehend Gesagte sinngemäß.

In einer dritten bevorzugten Ausführungsform enthalten die neuen pigmentierten Dual-Cure-Pulverslurries Partikel (I) und/oder (II), die einen Teil der eingesetzten Pigmente und/oder Füllstoffe (IV) enthalten, wogegen der andere Teil der Pigmente und/oder Füllstoffe (IV) als separate feste Phase vorliegt. Hierbei kann es sich bei dem in den Partikeln (I) und/oder (II) vorliegenden Anteil um die Hauptmenge, d.h. um mehr als 50% der eingesetzten Pigmente und/oder Füllstoffe (IV) handeln. Es können sich indes auch weniger als 50% in den Partikeln befinden. Hinsichtlich der Teilchengrößen gilt das vorstehend Gesagte auch hier sinngemäß.

Welcher Variante der neuen pigmentierten Dual-Cure-Pulverslurries der Vorzug gegeben wird, richtet sich insbesondere nach der Natur der Pigmente und/oder Füllstoffe (IV) sowie nach dem Verfahren, mit dem die jeweilige neue pigmentierte Dual-Cure-Pulverslurry hergestellt wird. In den meisten Fällen bietet die erste bevorzugte Ausführungsform besondere Vorteile, weswegen sie besonders bevorzugt ist.

Geeignete Pigmente (IV) sind farb- und/oder effektgebende, elektrisch leitfähige, magnetisch abschirmende und/oder fluoreszierende Pigmente oder Metallpulver. Die Pigmente (IV) können organischer oder anorganischer Natur sein.

Beispiele geeigneter Effektpigmente (IV) sind Metallplättchenpigmente wie handelsübliche Aluminiumbronzen, gemäß DE 36 36 183 A1 chromatierte Aluminiumbronzen, und handelsübliche Edelstahlbronzen sowie nichtmetallische Effektpigmente, wie zum Beispiel Perlglanz- bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36 156 A1, DE 37 18 446 A1, DE 37 19 804 A1, DE 39 30 601 A1, EP 0 068 311 A1, EP 0 264 843 A1, EP 0 265 820 A1, EP 0 283 852 A1, EP 0 293 746 A1, EP 0 417 567 A1, US 4,828,826 A oder US 5,244,649 A verwiesen.

Beispiele für geeignete anorganische farbgebende Pigmente (IV) sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente (IV) sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »Azomethin-Pigmente«, »Azopigmente«, und Seite 379, »MetallkomplexPigmente«, verwiesen.

Beispiele für fluoreszierende Pigmente (IV) zu (Tagesleuchtpigmente) sind Bis(azomethin)-Pigmente.

Beispiele für geeignete elektrisch leitfähige Pigmente (IV) sind Titandioxid/Zinnoxid-Pigmente.

Beispiele für magnetisch abschirmende Pigmente (IV) sind Pigmente auf der Basis von Eisenoxiden oder Chromdioxid.

Beispiele für geeignete Metallpulver (IV) sind Pulver aus Metallen und Metallegierungen, wie Aluminium, Zink, Kupfer, Bronze oder Messing.

Beispiele geeigneter organischer und anorganischer Füllstoffe (IV) sind Kreide, Calciumsulfate, Bariumsulfat, Silikate wie Talkum, Glimmer oder Kaolin, Kieselsäuren, Oxide wie Aluminiumhydroxid oder Magnesiumhydroxid oder organische Füllstoffe wie Kunststoffpulver, insbesondere aus Poylamid oder Polyacrlynitril. Ergänzend wird auf Römpp Lexikon Lacke und Druckfarben, Georg Thieme Verlag, 1998, Seiten 250 ff., »Füllstoffe«, verwiesen.

Es ist von Vorteil, Gemische von plättchenförmigen anorganischen Füllstoffen (IV) wie Talk oder Glimmer und nicht plättchen förmigen anorganischen Füllstoffen wie Kreide, Dolomit Calciumsulfate, oder Bariumsulfat zu verwenden, weil hierdurch die Viskosität und das Fließverhalten sehr gut eingestellt werden kann.

Beispiele geeigneter transparenter Füllstoffe (IV) sind solche auf der Basis von Siliziumdioxid, Aluminiumoxid oder Zirkoniumoxid, insbesondere aber Nanopartikel auf dieser Basis. Diese transparenten Füllstoffe können auch in den nicht pigmentierten erfindungsgemäßen Beschichtungsstoffen, wie Klarlacken, vorhanden sein.

Der Anteil der Pigmente und/oder Füllstoffe (IV) an den erfindungsgemäß zu verwendenden pigmentierten neuen Dual-Cure-Pulverslurries kann sehr breit variieren und richtet sich nach den Erfordernissen des Einzelfalls, insbesondere nach dem einzustellenden Effekt und/oder dem Deckvermögen der jeweils verwendeten Pigmente und/oder Füllstoffe (IV). Vorzugsweise liegt der Gehalt bei 0,5 bis 80, bevorzugt 0,8 bis 75, besonders bevorzugt 1,0 bis 70, ganz besonders bevorzugt 1,2 bis 65 und insbesondere 1,3 bis 60 Gew.-%, jeweils bezogen auf den Festkörpergehalt der neuen Dual-Cure-Pulverslurry.

Die neuen Dual-Cure-Pulverslurries können zusätzlich zu den Pigmenten und/oder Füllstoffen (IV) oder anstelle von diesen molekulardispers verteilte Farbstoffe (IV) enthalten.

Diese molekulardispers verteilten Farbstoffe (IV) können dabei entweder in den Partikeln (I) und/oder (II) oder in der kontinuierlichen Phase der neuen Dual-Cure-Pulverslurries vorhanden sein.

Sie können indes auch in den Partikeln (I) und/oder (II) und in der kontinuierlichen Phase vorliegen. Hierbei kann es sich bei dem in den Partikeln vorliegenden Anteil um die Hauptmenge, d.h. um mehr als 50% der eingesetzten organischen Farbstoffe (IV) handeln. Es könnnen sich indes auch weniger als 50% in den Partikeln befinden. Die Verteilung der organischen Farbstoffe (IV) zwischen den Phasen kann dem thermodynamischen Gleichgewicht entsprechen, das aus der Löslichkeit der organischen Farbstoffe (IV) in den Phasen resultiert. Die Verteilung kann aber auch weit von dem thermodynamischen Gleichgewicht entfernt liegen.

Geeignet sind alle organischen Farbstoffe (IV), die in den neuen Dual-Cure-Pulverslurries im vorstehend geschilderten Sinne löslich sind. Gut geeignet sind lichtechte organische Farbstoffe. Besonders gut geeignet sind lichtechte organische Farbstoffe (IV) mit einer geringen oder nicht vorhandenen Neigung zur Migration aus den aus den neuen Dual-Cure-Pulverslurries hergestellten Beschichtungen, Klebschichten und Dichtungen. Die Migrationsneigung kann der Fachmann anhand seines allgemeinen Fachwissens abschätzen und/oder mit Hilfe einfacher orientierender Vorversuche beispielsweise im Rahmen von Tönversuchen ermitteln.

Der Gehalt der neuen Dual-Cure-Pulverslurries an den molekulardispers verteilten organischen Farbstoffen (IV) kann außerordentlich breit variieren und richtet sich in erster Linie nach der Farbe und dem Buntton, der eingestellt werden soll, sowie nach der Menge der gegebenenfalls vorhandenen Pigmenten und/oder Füllstoffen (IV).

Zusatzstoffe (IV), die sowohl in den pigmentierten, gefüllten und/oder gefärbten als auch in den und nicht pigmentierten, gefüllten und/oder gefärbten neuen Dual-Cure-Pulverslurries vorhanden sein können sind

- zusätzliche Vernetzungsmittel, wie Aminoplastharze, wie sie beispielsweise in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A oder EP 0 245 700 A1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden, Carboxylgruppen enthaltende Verbindungen oder Harze, wie sie beispielsweise in der Patentschrift DE 196 52 813 A1 beschrieben werden, Epoxidgruppen enthaltende Verbindungen oder Harze, wie sie beispielsweise in den Patentschriften EP 0 299 420 A1, DE 22 14 650 B1, DE 27 49 576 B1, US 4,091,048 A oder US 3,781,379 A beschrieben werden, von den blockierten Polyisocyanaten (B) verschiedene blockierte Polyisocyanate, unblockierte Polyisocyanate, wie die vorstehend beschriebenen; Isocyanato(meth)acrylate, wie sie aus der europäischen Patentanmeldung EP 0 928 800 A1 bekannt sind; blockierte Isocyanato(meth)acrylate, wie sie beispielsweise in der nicht vorveröffentlichten deutschen Patentanmeldung DE 100 41 635.7 beschrieben werden; und/oder Tris(alkoxycarbonylamino)-triazine, wie sie aus den Patentschriften US 4,939,213 A, US 5,084,541 A, US 5,288,865 A oder EP 0 604 922 A bekannt sind;

- sonstige strahlenhärtbare Bestandteile, wie (meth)acrylfunktionelle (Meth)Acrylcopolymere, Polyetheracrylate, Polyesteracrylate, ungesättigte Polyester, Epoxyacrylate, von den ungesättigten polyfunktionellen Urethanen (C) verschiedene Urethanacrylate, Aminoacrylate, Melaminacrylate, Silikonacrylate und die entsprechenden Methacrylate;

- zusätzliche übliche und bekannte Bindemittel, die von den erfindungsgemäß zu verwendenden (Meth)Acrylatcopolymerisaten (A 1) und (A 2) verschieden sind, wie oligomere und polymere, thermisch härtbare, lineare und/oder verzweigte und/oder blockartig, kammartig und/oder statistisch aufgebaute Poly(meth)acrylate oder Acrylatcopolymerisate, insbesondere die in der Patentschrift DE 197 36 535 A1 beschriebenen; Polyester; die in den Patentschriften DE 40 09 858 A1 oder DE 44 37 535 A1 beschriebenen, Alkyde, acrylierte Polyester; Polylactone; Polycarbonate; Polyether; Epoxidharz-Amin-Addukte; (Meth)Acrylatdiole; partiell verseifte Polyvinylester; Polyurethane und acrylierte Polyurethane, insbesondere die in den Patentanmeldungen EP 0 521 928 A1, EP 0 522 420 A1, EP 0 522 419 A1, EP 0 730 613 A1 oder DE 44 37 535 A1 beschriebenen; oder Polyharnstoffe;

- lacktypische Additive, wie thermisch härtbare Reaktiverdünner (vgl. die deutschen Patentanmeldungen DE 198 09 643 A1, DE 198 40 605 A1 oder DE 198 05 421 A1) oder mit aktinischer Strahlung härtbare Reaktiwerdünner (vgl. Römpp Lexikon Lacke und Druckfarben, Stuttgart, New York, 1998, Seiten 491), niedrig siedende organische Lösemittel und/oder hochsiedende organische Lösemittel ("lange Lösemittel"), UV-Absorber, Lichtschutzmittel, Radikalfänger, thermolabile radikalische Initiatoren, Photoinitiatoren, Katalysatoren für die Vernetzung, Entlüftungsmittel, Slipadditive, Polymerisationsinhibitoren, Entschäumer, Emulgatoren, Netzmittel, Haftvermittler, Verlaufmittel, filmbildende Hilfsmittel, rheologiesteuernde Additive, wie ionische und/oder nichtionische Verdicker; oder Flammschutzmittel. Weitere Beispiele geeigneter Lackadditive werden in dem Lehrbuch »Lackadditive« von Johan Bieleman, Wiley-VCH, Weinheim, New York, 1998, beschrieben.

Die neuen Dual-Cure-Pulverslurries enthalten vorzugsweise nichtionische und ionische Verdicker (IV). Hierdurch wird der Neigung der vergleichsweise großen festen und/oder hochviskosen Partikel zur Sedimentation wirksam begegnet.

Beispiele nichtionischer Verdicker (IV) sind Hydroxyethylcellulose und Polyvinylalkohole.

Sogenannte nichtionische Assoziativ-Verdicker (IV) sind in vielfältiger Auswahl ebenfalls am Markt verfügbar. Sie bestehen in der Regel aus wasserverdünnbaren Polyurethanen, die Reaktionsprodukte von wasserlöslichen Polyetherdiolen, aliphatischen Diisocyanaten und monofunktionellen hydroxylischen Verbindungen mit organophilem Rest sind.

Ebenfalls kommerziell erhältlich sind ionische Verdicker (IV). Diese enthalten üblicherweise anionische Gruppen und basieren insbesondere auf speziellen Polyacrylatharzen mit Säuregruppen, die teilweise oder vollständig neutralisiert sein können.

Beispiele geeigneter Verdicker (IV) sind aus dem Lehrbuch "Lackadditive" von Johan Bielemann, Wiley-VCH, Weinheim, New York, 1998, Seiten 31 bis 65, oder aus den deutschen Patentanmeldungen DE 199 08 018 A1, Seite 12, Zeile 44, bis Seite 14, Zeile 65, DE 198 41 842 A1 oder 198 35 296 A 1 bekannt.

Für die neuen Dual-Cure-Pulverslurries ist es vorteilhaft, daß beide der vorstehend beschriebenen Verdicker-Typen (IV) hierin enthalten sind. Die Menge der zuzusetzenden Verdicker und das Verhältnis von ionischem zu nichtionischem Verdicker richtet sich nach der gewünschten Viskosität der erfindungsgemäß Slurry, die wiederum von der benötigten Absetzstabilität und den speziellen Bedürfnissen der Spritzapplikation vorgegeben werden. Der Fachmann kann daher die Menge der Verdicker und das Verhältnis der Verdicker-Typen zueinander anhand einfacher Überlegungen gegebenenfalls unter Zuhilfenahme von Vorversuchen ermitteln.

Vorzugsweise wird ein Viskositätsbereich von 50 bis 1.500 mPas bei einer Scherrate von 1.000 s$^{-1}$ und von 150 bis 8000 mPas bei einer Scherrate von 10 s$^{-1}$ sowie von 180 bis 12.000 mPas bei einer Scherrate von 1 s$^{-1}$ eingestellt.

Dieses als "strukturviskos" bekannte Viskositätsverhalten beschreibt einen Zustand, der einerseits den Bedürfnissen der Spritzapplikation und andererseits auch den Erfordernissen hinsichtlich Lager- und Absetzstabilität Rechnung trägt: Im bewegten Zustand, wie beispielsweise beim Umpumpen der neuen Dual-Cure-Pulverslurries in der Ringleitung der Lackieranlage und beim Versprühen, nehmen die neuen Dual-Cure-Pulverslurries einen niederviskosen Zustand ein, der eine gute Verarbeitbarkeit gewährleistet. Ohne Scherbeanspruchung hingegen steigt die Viskosität an und gewährleistet auf diese Weise, daß die nach der Appliaktion auf den zu beschichtenden, zu verklebenden und/oder abzudichtenden Substraten befindlichen Dual-Cure-Beschichtungsstoffe,-Klebstoffe oder -Dichtungsmassen eine verringerte Neigung zum Ablaufen an senkrechten Flächen ("Läuferbildung") zeigen. In gleicher Weise führt die höhere Viskosität im unbewegten Zustand, wie etwa bei der Lagerung, dazu, daß ein Absetzen der festen und/hochviskosen Partikel größtenteils verhindert wird oder ein Wiederaufrühren der während der Lagerzeit nur schwach abgesetzten neuen Dual-Cure-Pulverslurries gewährleistet ist.

Für die Verwendbarkeit der vorstehend beschriebenen Zusatzstoffe (IV) ist es wesentlich, daß sie die Glasübergangstemperatur Tg oder die Mindestfilmbildetemperatur (MTF) (vgl. Lexikon Lacke und Druckfarben, Georg Thieme Verlag, Stuttgart, New York, 1998, S. 391, »Mindestfilmbildetemperatur«) der Partikel (I) und/oder (II) der neuen Dual-Cure-Pulverslurries nicht so weit erniedrigen, daß sie koagulieren.

Der Festkörpergehalt der neuen Dual-Cure-Pulverslurries kann sehr breit variieren. Vorzugsweise liegt der Gehalt bei 10 bis 80, bevorzugt 12 bis 75, besonders bevorzugt 14 bis 70, ganz besonders bevorzugt 16 bis 65 und insbesondere 18 bis 60 Gew.-%, jeweils bezogen auf die neue Dual-Cure-Pulverslurry.

Ebenso kann das Verhältnis von Pulverslurry (I) zu Pulverslurry (II) breit variieren und richtet sich nach den Erfordernissen des Einzelfalls. Dabei kann die Pulverslurry (I) im Überschuß über die Pulverslurry (II) eingesetzt werden. Der umgekehrte Fall ist ebenfalls möglich. Vorzugsweise liegt das Verhältnis von Pulverslurry (I) zu Pulverslurry (II) bei 10 : 1 bis 1 : 5, bevorzugt 7:1 bis 1 : 4 und insbesondere 5 : 1 bis 1 : 3.

Die Herstellung der neuen Dual-Cure-Pulverslurries erfolgt zweckmäßigerweise durch das Vermischen der vorstehend beschriebenen Pulverslurries (I) und (II) in den gewünschten Mengenverhältnissen in geeigneten Mischaggregaten, wie Rührkessel, Dissolver, Rührwerksmühlen, statische Mischer, Zahnkranzdispergatoren oder Extruder, unter dem Ausschluß aktinischer Strahlung.

Die neuen Dual-Cure-Pulverslurries eignen sich hervorragend als Dual-Cure-Beschichtungsstoffe, -Klebstoffe und -Dichtungsmassen oder zu deren Herstellung

Die neuen Dual-Cure-Beschichtungsstoffe sind hervorragend für die Herstellung von ein- oder mehrschichtigen, farb- und/oder effektgebenden, elektrisch leitfähigen, magnetisch abschirmenden oder fluoreszierenden Beschichtungen, wie Füllerlackierungen, Basislackierungen, Unidecklackierungen oder Kombinationseffektschichten, oder von ein- oder mehrschichtigen Klarlackierungen geeignet.

Die erfindungsgemäßen Dual-Cure-Klebstoffe sind hervorragend für die Herstellung von Klebschichten, und die erfindungsgemäßen Dual-Cure-Dichtungsmassen sind hervorragend für die Herstellung von Dichtungen geeignet.

Ganz besondere Vorteile resultieren bei der Verwendung der neuen Dual-Cure-Beschichtungsstoffe als Klarlacke für die Herstellung von ein- oder mehrschichtigen Klarlackierungen. Insbesondere werden die neuen Dual-Cure-Klarlacke zur Herstellung von farb- und/oder effektgebenden Mehrschichtlackierungen nach dem naß-in-naß Verfahren verwendet, bei dem ein Basislack, insbesondere ein Wasserbasislack, auf die Oberfläche eines Substrats appliziert wird, wonach- man die resultierende Basislackschicht, ohne sie auszuhärten, trocknet und mit einer Klarlackschicht überschichtet. Anschließend werden die beiden Schichten gemeinsam gehärtet.

Methodisch weist die Applikation der neuen Dual-Cure-Beschichtungsstoffe, -Klebstoffe und Dichtungsmassen keine Besonderheiten auf, sondern kann durch alle üblichen Applikationsmethoden, wie z.B. Spritzen, Rakeln, Streichen, Gießen, Tauchen, Träufeln oder Walzen erfolgen. Vorzugsweise werden bei den erfindungsgemäßen Dual-Cure-Beschichtungsstoffen Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air- Heißspritzen. Vorzugsweise erfolgt die Applikation unter Ausschluß von Tageslicht, um eine vorzeitige Vernetzung der neuen Dual-Cure-Pulverslurries zu verhindern.

Als Substrate kommen all die in Betracht, deren Oberfläche durch die gemeinsame Anwendung von aktinischer Strahlung und Hitze bei der Härtung der hierauf befindlichen Dual-Cure-Schichten nicht geschädigt wird. Vorzugsweise bestehen die Substrate aus Metallen, Kunststoffen, Holz, Keramik, Stein, Textil, Faserverbunden, Leder, Glas, Glasfasern, Glas- und Steinwolle, mineral- und harzgebundene Baustoffen, wie Gips-und Zementplatten oder Dachziegel, sowie Verbunden dieser Materialien.

Demnach sind die neuen Dual-Cure-Beschichtungsstoffe, -Klebstoffe und -Dichtungsmassen nicht nur für Anwendungen auf den Gebieten der Kraftfahrzeugserienlackierung und Kraftfahrzeugreparaturlackierungen hervorragend geeignet, sondern kommen auch für die Beschichtung, das Verkleben und das Abdichten von Bauwerken im Innen- und Außenbereich und von Türen, Fenstern und Möbeln, für die industrielle Lackierung, inklusive Coil Coating, Container Coating und die Imprägnierung und/oder Beschichtung elektrotechnischer Bauteile, sowie für die Lackierung von weißer Ware, inclusive Haushaltsgeräte, Heizkessel und Radiatoren, in Betracht. Im Rahmen der industriellen Lackierungen eignen sie sich für die Lackierung, das Verkleben oder das Abdichten praktisch aller Teile und Gegenstände für den privaten oder industriellen Gebrauch, wie Haushaltsgeräte, Kleinteile aus Metall, wie Schrauben und Muttern, Radkappen, Felgen, Emballagen, oder elektrotechnische Bauteile, wie Motorwicklungen oder Transformatorwicklungen (elektrische Wickelgüter).

Im Falle elektrisch leitfähiger Substrate können Grundierungen verwendet werden, die in üblicher und bekannter Weise aus Elektrotauchlacken hergestellt werden. Hierfür kommen sowohl anodische als auch kathodische Elektrotauchlacke; insbesondere aber kathodische Elektrotauchlacke, in Betracht. Im Falle von nichtfunktionalisierten und/oder unpolaren Kunststoffoberflächen können diese vor der Beschichtung in bekannter Weise einer Vorbehandlung, wie mit einem Plasma oder mit Beflammen, unterzogen oder mit einer Hydrogrundierung versehen werden.

Auch die thermische Härtung der applizierten erfindungsgemäßen Dual-Cure-Gemische weist keine methodischen Besonderheiten auf, sondern erfolgt nach den üblichen und bekannten thermischen Methoden, wie Erhitzen in einem Umluftofen oder Bestrahlen mit IR-Lampen.

Für die Härtung mit aktinischer Strahlung kommen Strahlenquellen wie Quecksilberhoch- oder -niederdruckdampflampen, welche gegebenenfalls mit Blei dotiert sind, um ein Strahlenfenster bis zu 405 nm zu öffnen, oder Elektronenstrahlquellen in Betracht. Weitere Beispiele geeigneter Verfahren und Vorrichtungen zur Härtung mit aktinischer Strahlung werden in der deutschen Patentanmeldung DE 198 18 735A1, Spalte 10, Zeilen 31 bis 61, beschrieben. Vorzugsweise wird eine UV-Durchlaufanlage der Firma IST verwendet.

Die resultierenden Beschichtungen, insbesondere die erfindungsgemäßen ein- oder mehrschichtigen farb- und/oder effektgebenden Lackierungen und Klarlackierungen sind einfach herzustellen und weisen hervorragende optische Eigenschaften und eine sehr hohe Licht-, Chemikalien-, Wasser- und Witterungsbeständigkeit auf. Insbesondere sind sie frei von Trübungen und Inhomogenitäten. Außerdem sind hart, flexibel und kratzfest. Sie weisen eine hervorragende Zwischenschichthaftung und eine gute bis sehr gute Haftung zu Kraftfahrzeugreparaturlackierungen und zu Kraftfahrzeug-Serienreparaturlackierungen auf. Bekanntermaßen werden bei der Kraftfahrzeug-Serienreparaturlackierung die fertig lackierten Karosserien noch einmal insgesamt mit den Originalsserienlackierungen (OEM) überlackiert.

Die Klebschichten verbinden die unterschiedlichsten Substrate auf Dauer haftfest miteinander und haben eine hohe chemische und mechanische Stabilität auch bei extremen Temperaturen und/oder Temperaturenschwankungen.

Desgleichen dichten die Dichtungen die Substrate auf Dauer ab, wobei sie eine hohe chemische und mechanische Stabilität auch bei extremen Temperaturen und/oder Temperatürschwankungen. sogar i. V. m. der Einwirkung aggressiver Chemikalien aufweisen.

Es ist aber ein ganz wesentlicher Vorteil der neuen Dual-Cure-Pulverslurries und der neuen Dual-Cure-Beschichtungsstoffe, -Klebstoffe und -Dichtungsmassen, daß sie auch in den Schattenzonen komplex geformter dreidimensionaler Substrate, wie Karosserien, Radiatoren oder elektrische Wickelgüter, auch ohne optimale, insbesondere vollständige, Ausleuchtung der Schattenzonen mit aktinischer Strahlung Beschichtungen, Klebschichten und Dichtungen liefern, deren anwendungstechnisches Eigenschaftsprofil an das der Beschichtungen, Klebschichten und Dichtungen außerhalb der Schattenzonen zumindest heranreicht. Dadurch werden die in den Schattenzonen befindlichen Beschichtungen, Klebschichten und Dichtungen auch nicht mehr leicht durch mechanische und/oder chemische Einwirkung geschädigt.

Demzufolge weisen die auf den vorstehend aufgeführten technologischen Gebieten üblicherweise angewandten grundierten oder ungrundierten Substrate, die mit mindestens einer neuen Beschichtung beschichtet, mit mindestens einer neuen Klebschicht verklebt und/oder mit mindestens einer neuen Dichtung abgedichtet sind, bei einem besonders vorteilhaften anwendungstechnischen Eigenschaftsprofil eine besonders lange Gebrauchsdauer auf, was sie wirtschaftlich besonders attraktiv macht.

**Beispiele**

**Herstellbeispiel 1**

**Die Herstellung eines Methacrylatcopolymerisats (IA1)**

In einem geeigneten Laborreaktor, ausgerüstet mit Rührer, Rückflusskühler, Thermometer, Stickstoffeinleitungsrohr und zwei Zulaufgefäßen, wurden 895 Gewichtsteile Gewichtsteile Methylethylketon vorgelegt und auf 80°C erhitzt. Anschließend wurden aus dem ersten Zulaufgefäß eine Monomermischung aus 424 Gewichtsteilen Ethythexylacrylat, 95 Gewichtsteilen Styrol, 257 Gewichtsteilen Hydroxyethylmethacrylat und 143 Gewichtsteilen 4-Hydroxybutylacrylat und 34 Gewichtsteilen Acrylsäure während vier Stunden und aus dem zweiten Zulaufgefäßen eine Lösung aus 95 Gewichtsteilen tert.-Butylperoxyethylhexanoat und 57 Gewichtsteilen Methylethylketon während viereinhalb Stunden gleichmäßig unter Rühren zudosiert. Mit dem Beginn der Zuläufe wurde gleichzeitig begonnen. Nach der Beendigung des zweiten Zulaufs (Initiatorzulauf) wurde die Reaktionsmischung noch während zwei Stunden bei 80 °C nachpolymerisiert. Es resultierte eine Lösung des Methacrylatcopolymerisats (A 1) mit einem Festkörpergehalt von 52 Gew.-% (eine Stunde/130 °C) mit einer Säurezahl von 24,3 mg KOH/g Festkörper und einer Hydroxylzahl von 175 mg KOH/g Festkörper. Das Methacrylatcopolymerisat (I A 1) wies eine Glasübergangstemperatur Tg von -22 °C auf.

**Herstellbeispiel 2**

**Die Herstellung eines Methacrylatcopolymerisats (I A 2)**

Herstellbeispiel 1 wurde wiederholt, nur daß 889 Gewichtsteile Methylethylketon vorgelegt und als Initiatorzulauf eine Lösung aus 66 Gewichtsteilen tert.-Butylperoxyethylhexanoat und 87 Gewichtsteilen Methylethylketon während 6,5 Stunden und als Monomerzulauf eine Monomermischung aus 146 Gewichtsteilen Styrol, 459 Gewichtsteilen tert.-Butylacrylat, 219 Gewichtsteilen n-Butylmethacrylat, 583 Gewichtsteilen Hydroxypropylmethacrylat und 51 Gewichtsteilen Acrylsäure zudosiert wurden. Es resultierte eine Lösung des Methacrylatcopolymerisats (A 2) mit einem Festkörpergehalt von 58,6 Gew.-% (eine Stunde/130 °C) mit einer Säurezahl von 27,5 mg KOH/g Festkörper und einer Hydroxylzahl von 156 mg KOH/g Festkörper. Das Methacrylatcopolymerisat (I A 2) wies eine Glasübergangstemperatur Tg von +65 °C auf.

**Herstellbeispiel 3**

**Die Herstellung eines blockierten Polyisocyanats (I B)**

In einem geeigneten Laborreaktor, ausgerüstet mit Rührer, Rückflusskühler, Thermometer und Stickstoffeinleitungsrohr wurden 1068 Gewichtsteile eines Trimeren vom Isocyanurattyp von Hexamethylendiisocyanat (Desmodur ® N 3300 der Firma Bayer AG) und 380 Gewichtsteile Methylethylketon vorgelegt und langsam auf 40 °C erhitzt. Anschließend wurden insgesamt 532 Gewichtsteile 3,5-Dimethylpyrazol portionsweise derart hinzugegeben, daß die Temperatur der Reaktionsmischung nicht höher als 80 °C stieg. Die Reaktionsmischung wurde solange 80 °C gehalten, bis kein freies Isocyanat mehr nachweisbar war, und anschließend abgekühlt. Die resultierende Lösung des blockierten Polyisocyanats (I B) wies einen Festkörpergehalt von 80 Gew.-% auf.

## Herstellbeispiel 4

### Die Herstellung eines weiteren blockierten Polyisocyanats (I B)

837 Teile isophorondiisocyanat wurden in einem geeigneten Reaktionsgefäß vorgelegt und mit 0,1 Teilen Dibutylzinndilaurat versetzt. Sodann ließ man eine Lösung aus 168 Teilen Trimethylolpropan und 431 Teilen Methylethylketon langsam zulaufen. Durch die exotherme Reaktion stieg die Temperatur an. Nachdem 80 °C erreicht waren, wurde die Temperatur durch äußere Kühlung konstant gehalten, und der Zulauf wurde gegebenenfalls leicht gedrosselt. Nach Ende des Zulaufs hielt man noch für ca.1 Stunde auf dieser Temperatur, bis der Isocyanatgehalt des Festkörpers 15,7% (bezogen auf NCO-Gruppen) erreicht hatte. Anschließend wurde das Reaktionsgemisch auf 40 °C gekühlt, und es wurde eine Lösung von 362 Teilen 3,5-Dimethylpyrazol in 155 Teilen Methylethylketon innerhalb 30 Minuten zugegeben. Nachdem das Reaktionsgemisch sich durch die Exothermie auf 80 °C erwärmt hatte, hielt man die Temperatur für 30 Minuten konstant, bis der NCO-Gehalt auf kleiner 0,1 % abgesunken war. Sodann fügte man 47 Teile n-Butanol zu der Reaktionsmischung hinzu, hielt für weitere 30 Minuten bei 80 °C und trug sie nach kurzer Kühlung aus.
Das Reaktionsprodukt wies einen Festgehalt von 69,3 % (1h bei 130 °C) auf.

## Herstellbeispiel 5

### Die Herstellung der Pulverslurry (I)

In einem geeigneten Rührgefäß aus Glas, ausgerüstet mit einem Schnellrührer, wurden 200 Gewichtsteile der Lösung des Methacrylatcopolymerisats (I A 1) gemäß Herstellbeispiel 1, 181 Gewichtsteile der Lösung des Methacrylatcopolymerisats (I A 2) gemäß Herstellbeispiel 2, 169 Gewichtsteile der Lösung des blockierten Polyisocyanats (I B) des Herstellbeispiels 3, 83 Gewichtsteile der Lösung des blockierten Polyisocyanats (I B) des Herstellbeispiels 4 und 9 Gewichtsteile Dimethylethanolamin eingewogen und intensiv miteinander vermischt.
Zu dieser organischen Phase wurden 658 Gewichtsteile Wasser langsam unter Rühren zugegeben. Das Methylethylketon wurde anschließend unter Vakuum bei maximal 35 °C abdestilliert.
Die Pulverslurry (I) wurde durch Zugabe von 3,0 Gewichtsteilen Acrysol ® RM-8W (handelsüblicher Assoziatiwerdicker) und, 0,8 Gewichtsteilen Viskalex ® HV 30 (handelsüblicher ionischer Verdicker) komplettiert.

## Herstellbeispiel 6

### Die Herstellung der Dispersion (II)

### 6.1 Die Herstellung eines Allophanats aus Hexamethylendiisocyanat und 2-Hydroxyethylacrylat

Die Herstellung des Allophanats erfolgte gemäß der deutschen Patentschrift DE 198 60 041 A1, Experimenteller Teil 1.1, Produkt Nr. 6. Hierzu wurde Hexamethylendiisocyanat unter Stickstoffbedeckung mit 40 Mol-% (bezogen auf das Isocyanat) 2-Hydroxyethylacrylat vermischt und auf 80°C erwärmt. Nach Zugabe von 200 Gew.-ppm (bezogen auf das Isocyanat) N,N,N-Trimethyl-N-(2-hydroxypropyl)ammonium-2-ethylhexanoat wurde die Reaktionsmischung langsam auf 120°C erhitzt und bei dieser Reaktionstemperatur gehalten. Bei einem Isocyanatgehalt der Reaktionsmischung von 13,5 Gew.-% wurde die Reaktion durch Zugabe von 250 Gew.-ppm (bezogen auf das Isocyanat) Di(2-ethylhexyl)phosphat gestoppt. Die Reaktionsmischung wurde dann im Dünnschichtverdampfer bei 135°C und 2,5 mbar von nichtumgesetztem Hexamethylendiisocyanat befreit. Das resultierende Allophanat hatte nach der Destillation einen Isocyanatgehalt von 13,5 Gew.-% und eine Viskosität von 810 mPas bei 23°C.

### 6.2 Die Herstellung eines isocyanatgruppenhaltigen Präpolymeren

In einem Rührkessel wurden 100 Gewichtsteile des vorstehend beschriebenen Allophanats (vgl. Ziff. 6.1), 0,13 Gewichtsteile 2,6-Di-tert.-butyl-p-kresol und 0,1 Gewichtsteile. Hydrochinonmonomethylether vorgelegt. Nach dem Zumischen von 0,02 Gewichtsteilen Dibutylzinndilaurat von 17,5 Gewichtsteilen 3,5-Dimethylpyrazol wurde das Reaktionsgemisch während drei Stunden bei 70°C gerührt.

**6.3 Die Herstellung der Dispersion (II)**

Zu dem gemäß Ziff. 6.2 resultierenden Reaktionsgemisch wurden 3,3 Gewichtsteile Thioglykolsäure hinzugegeben. Danach wurde das Reaktionsgemisch während weiteren drei Stunden bei 70°C gerührt und hiernach abgekühlt. Der Gehalt an freien Isocyanatgruppen betrug hiernach 3 Gew.-%. Nach dem Zumischen von 9,6 Gewichtsteilen Diethanolamin, 4,4 Gewichtsteilen Triethylamin (entsprechend einem Neutralisationsgrad von 120%), wurde das Reaktionsgemisch in 168 Gewichtsteilen Wasser dispergiert. Es resultierte eine stabile Dipsersion (II) mit einem Festkörpergehalt von 43 Gew.-%.

Herstellbeispiel 7

**Die Herstellung einer Mischung aus der Dispersion (II) und einem Urethanacrylat (III)**

Die Dispersion (II) des Herstellbeispiels 6 wurde mit 32,6 Gewichtsteilen eines aliphatischen Urethanacrylats auf der Basis von Isophorondiisocyanat mit 6 Acrylatgruppen im Molekül (Ebecryl ® 1290 der Firma UCB, Belgien), 0,2 Gewichtsteilen Byk ® 348 (handelsübliches Tensid auf Siliconbasis der Firma Byk Chemie), 0,2 Gewichtsteilen Byk ® 380 (handelsübliches Verlaufmittel der Firma Byk Chemie), 0,04 Gewichtsteilen Byk ® 307 (handelsübliches Antikrateradditiv der Firma Byk Chemie) und 0,15 Gewichtsteilen Acrysol ® RM8 (handelsüblicher Assoziatiwerdicker der Firma Rhom & Haas) versetzt. Die resultierende Mischung wurde mit Hilfe eines Labor Dissolvers vermischt und homogenisiert.

**Beispiel 1**

**Die Herstellung der neuen Dual-Cure-Pulverslurry**

750 Gewichtsteile der Pulverslurry (I) des Herstellbeispiels 5, 250 Gewichtsteile der Mischung des Herstellbeispiels 7 und 30 Gewichtsteile einer Photoinitiatormischung aus Lucirin ® TPO und Irgacure ® 184 in Gewichtsverhältnis 5 : 1 wurden mit Hilfe eines Labor-Dissolvers vermischt und homogenisiert. Nach ihrer Herstellung ließ man die neuen Dual-Cure-Pulverslurry vor der Applikation einen Tag lang ruhen. Sie ließ sich problemlos applizieren. Die neue Dual-Cure-Pulverslurry war darüber hinaus lagerstabil.

**Beispiel 2**

**Die Herstellung einer farbgebenden Mehrschichtlackierung unter Verwendung der neuen Dual-Cure-Pulverslurry**

Die neue Dual-Cure-Pulverslurry des Beispiels 1 wurde pneumatisch mit einer Fließbecherpistole auf Stahlbleche appliziert, die mit einem schwarzen Wasserbasislack vorlackiert waren. Die Naßschichtdicke der applizierten Schichten lag bei 30 bis 40 $\mu$m. Nach einer Ablüftzeit von 5 Minuten bei 23 °C wurden die applizierten Schichten sowohl unter Dual-Cure-Bedingungen als auch unter rein thermischen Bedingungen zur Simulation der Härtung in den Schattenzonen komplex geformter dreidimensionaler Substrate gehärtet.

Für die thermische Härtung wurden Umluftöfen der Firma Binder und der Firma Heraeus verwendet. Der angegebenen Temperaturen beziehen sich auf die Umluft.

Die Strahlenhärtung wurde mit einer UV-Durchlaufanlage der Firma IST durchgeführt. Die Bestrahlung erfolgte unter atmosphärischer Luft. Die Strahlungsdosis wurde mit einem handelsüblichen Dosimeter unmittelbar vor der Härtung ermittelt und gegebenenfalls durch die Veränderung der Bandgeschwindigkeit variiert. Die Strahlungsquelle war eine Quecksilbermitteldruckdampflampe.

Um den kontinuierlichen Dual-Cure-Lackier- und Härtungsprozeß bei der Herstellung von PKW zu simulieren, wurden die beschichteten Stahlbleche innerhalb kürzester Zeit (maximal zehn Sekunden) vom Umluftofen, der auf 120 °C temperiert war, in die UV-Durchlaufanlage überführt. Die unter diesen Bedingungen auftretende Abkühlung der beschichteten Stahlblech wurde mit einem Kontaktthermometer gemessen. Sie lag bei maximal 20 °C.

Bei der Dual-Cure-Härtung wurden die folgenden Bedingungen angewandt:

- Trocknung: 10 Minuten bei Raumtemperatur, 5 Minuten bei 60 °C, 7 Minuten bei 120 °C; UV-Härtung: Dosis 3 J/cm$^2$; thermische Härtung: 30 Minuten bei 155 °C.

Bei der rein thermischen Härtung wurden die folgenden Bedingungen angewandt:

- Trocknung: 10 Minuten bei Raumtemperatur, 5 Minuten bei 60 °C, 7 Minuten bei 120°C; Härtung 30 Minuten bei 155°C.

Die Kratzbeständigkeit der resultierenden Mehrschichtlackierungen wurde mit Hilfe des in der Fachwelt bekannten Amtec-Kistler-Tests bestimmt. Verwendet wurden 1,5 g/l Quarzfeinstmehl Sikron SH 200. Es wurde der Glanzgradverlust bei 20° nach Reinigung mit Waschbenzin gemessen.

Die Chemikalienbeständigkeit wurde mit Hilfe des in der Fachwelt bekannten Gradientenofentests nach DaimlerChrysler PBODDC371 bestimmt. Es wurden die Temperaturen registriert, ab denen die applizierten Chemikalien sichtbare Beschädigungen in den Mehrschichtlackierungen hinterließen.

Die Ergebnisse der Tests finden sich in der Tabelle.

Die Ergebnisse der Tabelle untermauern, daß die neue Dual-Cure-Pulverslurry auch in den Schattenzonen (simuliert durch die rein thermische Härtung) Beschichtungen lieferte, deren Kratzfestigkeit und Chemikalienbeständigkeit derjenigen von Beschichtungen außerhalb der Schattenzonen nahekamen.

**Tabelle: Kratzbeständigkeit und Chemikalienbeständigkeit der neuen Mehrschichtlackierungen**

| Härtungsmethode | | Glanzgradverlust | | | |
| --- | --- | --- | --- | --- | --- |
| | | | Schwefelsäure | | |
| | **Pankreatin** | | **Baumharz** | **Wasser** | |
| Dual-Cure | 15 | < 37 | 67 | < 37 | 52 |
| Thermisch | 23 | < 37 | < 37 | 75 | < 37 |

**Patentansprüche**

**1.** Thermisch und mit aktinischer Strahlung härtbare wäßrige Dispersionen, enthaltend

(I) flüssige, hochviskose und/oder feste, unter Lagerungs- und Anwendungsbedingungen dimensionsstabile Partikel, enthaltend

(I A) ein Bindemittel, das frei ist von Kohlenstoff-Kohlenstoff-Doppelbindungen, die mit aktinischer Strahlung aktivierbar sind, enthaltend mindestens ein (Meth)Acrylatcopolymerisat (I A) mit im statistischen Mittel mindestens einer isocyanatreaktiven funktionellen Gruppe und mindestens einer dispergierenden funktionellen Gruppe, und
(I B) mindestens ein blockiertes Polyisocyanat;

(II) flüssige, hochviskose und/oder feste, unter Lagerungs- und Anwendungsbedingungen dimensionsstabile Partikel, enthaltend mindestens ein Polyurethan (II) mit mindestens einer isocyanatreaktiven funktionellen Gruppe, mindestens einer funktionellen Gruppe mit mindestens einer mit aktinischer Strahlung aktivierbaren Bindung sowie mindestens einer dispergierenden funktionellen Gruppe,
sowie
(III) mindestens einen olefinisch ungesättigten Bestandteil, der frei ist von isocyanatreaktiven funktionellen Gruppen und im statistischen Mittel mehr als eine mit aktinischer Strahlung aktivierbare Kohlenstoff-Kohlenstoff-Doppelbindung im Molekül enthält.

**2.** Dispersionen nach Anspruch 1, **dadurch gekennzeichnet, daß** die (Meth)Acrylatcopolymerisate (I A) eine Glasübergangstemperatur Tg von -40 bis +70 °Celsius haben.

**3.** Dispersionen nach Anspruch 1 oder 2, **dadurch gekennzeichnet, daß** das Bindemittel (I A)

(I A 1) mindestens ein (Meth)Acrylatcopolymerisats mit im statistischen Mittel mindestens einer isocyanatreaktiven funktionellen Gruppe im Molekül und einer Glasübergangstemperatur Tg unterhalb der Raumtemperatur und
(I A 2) mindestens ein (Meth)Acrylatcopolymerisat mit im statistischen Mittel mindestens einer isocyanatreaktiven funktionellen Gruppe im Molekül, und einer Glasübergangstemperatur Tg oberhalb der Raumtemperatur

enthält.

**4.** Dispersionen nach einem der Ansprüche 1 bis 3 , **dadurch gekennzeichnet, daß** das blockierte Polyisocyanat (I B) mindestens ein weiches, flexibilisierendes Segment im Molekül enthält, das als Bestandteil dreidimensionaler polymerer Netzwerke deren Glasübergangstemperatur Tg erniedrigt.

**5.** Dispersionen nach Anspruch 4, **dadurch gekennzeichnet, daß** das weiche, flexibilisierende Segment aus der Gruppe, bestehend aus

(i) substituierten oder unsubstituierten, linearen oder verzweigten Alkandiyl-Resten mit 4 bis 20, Kohlenstoffatomen;

(ii) zweibindigen Polyesterresten mit wiederkehrenden Polyesteranteilen der Formel -(-C(O)-(CHR$^1$)$_m$-CH$_2$-O-)-, worin der Index m 4 bis 6 und der Substitutent R$^1$ = Wasserstoff, ein Alkyl-, Cycloalkyl- oder Alkoxy-Rest bedeutet, wobei kein Substituent mehr als 12 Kohlenstoffatome enthält ;

(iii) zweibindigen linearen Polyetherresten der allgemeinen Formel -(-O-(CHR$^2$)$_o$-)$_p$O-, wobei der Substituent R$^2$ = Wasserstoff oder ein niedriger, gegebenenfalls substituierter Alkylrest ist und der Index o = 2 bis 6, und der Index p = 2 bis 100;

(iv) linearen zweibindigen Siloxanresten,

(v) zweibindigen hydrierten Polybutadien und Polyisoprenresten;

(vi) zweibindigen Resten von statistischen oder alternierenden Butadien-Isopren-Copolymerisaten und Butadien-Isopren-Pfropfmischpolymerisaten sowie

(vii) zweibindigen Resten von Ethylen-Propylen-Dien-Copolymerisaten,

ausgewählt wird.

**6.** Dispersionen nach einem der Ansprüche 1 bis 5, **dadurch gekennzeichnet, daß** die Partikel (II) blockierte Polyisocyanatgruppen enthalten.

**7.** Dispersionen nach einem der Ansprüche 1 bis 6, **dadurch gekennzeichnet, daß** die Polyurethane (II) aufgebaut sind aus

(IIA) mindestens einem aliphatischen Polyisocyanat mit einer Isocyanatfunktionalität von 2,0 bis 6,0,

(IIB) mindestens einer Verbindung mit mindestens einer isocyanatreaktiven funktionellen Gruppe sowie mindestens einer mit aktinischer Strahlung aktivierbaren Bindung,

(II C) mindestens einer niedermolekularen aliphatischen Verbindung mit mindestens zwei isocyanatreaktiven funktionellen Gruppen,

(II D) mindestens einer Verbindung mit mindestens einer isocyanatreaktiven funktionellen Gruppe und mindestens einer dispergierenden funktionellen Gruppe,

(II E) mindestens einem Neutralisationsmittel für die dispergierenden funktionellen Gruppen der Verbindung D) sowie gegebenenfalls

(II G) mindestens einer von den Verbindungen B) bis E) verschiedenen Verbindung mit einer isocyanatreaktiven funktionellen Gruppe.

**8.** Dispersionen nach Anspruch 7, **dadurch gekennzeichnet, daß** die blockierten Isocyanatgruppen in die Polyurethane (II)

1. durch Zugabe mindestens eines blockierten Polyisocyanats (II H) vor, während und/oder nach der Herstellung des Polyurethans (II) oder

2. über die Umsetzung von mindestens einem Blockierungsmittel (II F) für Isocyanatgruppen und/oder mindestens einer Verbindung (II F) mit mindestens einer blockierten Isocyanatgruppe und einer isocyanatreaktiven Gruppe mit den isocyanatgruppenhaltigen Polyurethanpräpolymeren, die aus der Umsetzung eines stöchiometrischen Überschusses der Verbindungen (II A) mit den Verbindungen (II B) sowie gegebenenfalls (II C) und (II G) sowie mit einer zur Dispergierbarkeit in wäßrigen Medien ausreichenden Menge an Verbindungen (II D) und (II E) resultieren,

einführbar sind.

**9.** Dispersionen nach einem der Ansprüche 1 bis 8, **dadurch gekennzeichnet, daß** der olefinisch ungesättigte Bestandteil (III) mindestens ein hartes Segment im Molekül enthält, das als Bestandteil dreidimensionaler polymerer Netzwerke deren Glasübergangstemperatur erhöht.

**EP 1 373 422 B1**

**10.** Dispersionen nach Anspruch 9, **dadurch gekennzeichnet, daß** die hartmachenden Segmente aus der Gruppe, bestehend aus zwei-und mehrbindigen aromatischen und cycloaliphatischen Resten, ausgewählt werden.

**11.** Dispersionen nach einem der Ansprüche 1 bis 10, **dadurch gekennzeichnet, daß** der olefinisch ungesättigte Bestandteil (III) in den Partikeln (I), den Partikeln (II) und/oder der kontinuierlichen Phase der Dispersionen vorliegt.

**12.** Dispersionen nach einem der Ansprüche 1 bis 11, **dadurch gekennzeichnet, daß** die isocyanatreaktiven Gruppen aus der Gruppe, bestehend aus Hydroxyl-, Thiol- sowie primären und sekundären Aminogruppen, ausgewählt werden.

**13.** Dispersionen nach einem der Ansprüche 1 bis 12, **dadurch gekennzeichnet, daß** als mit aktinischer Strahlung aktivierbare Bindungen Kohlenstoff-Wasserstoff-Einzeibindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder -Doppelbindungen verwendet werden.

**14.** Dispersionen nach einem der Ansprüche 1 bis 13, **dadurch gekennzeichnet, daß** die Kohlenstoff-Kohlenstoff-Doppelbindungen in (Meth)Acryloyl-, Ethacryloyl-, Crotonat-, Cinnamat-, Vinylether-, Vinylester-, Ethenylarylen-, Dicyclopentadienyl-, Norbornenyl-, Isoprenyl-, Isoprenyl-, Isopropenyl-, Allyl- oder Butenylgruppen; Ethenylarylen-, Dicyclopentadienyl-, Norbornenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl-oder Butenylestergruppen vorliegen.

**15.** Dispersionen nach einem oder Ansprüche 1 bis 14, **dadurch gekennzeichnet, daß** es sich bei den dispergierenden funktionellen Gruppen um (potentiell) anionische Gruppen, ausgewählt aus der Gruppe, bestehend aus Carbonsäure-, Sulfonsäure- und Phosphonsäuregruppen, handelt.

**16.** Verfahren zur Herstellung von thermisch und mit aktinischer Strahlung härtbaren wäßrigen Dispersionen gemäß einem der Ansprüche 1 bis 15, **dadurch gekennzeichnet, daß** man

(1) mindestens eine wäßrige Dispersion (I), enthaltend mindestens eine Art von Partikeln (I), herstellt,
(2) mindestens eine wäßrige Dispersion (II), enthaltend mindestens eine Art von Partikeln (II), herstellt und
(3) die wäßrigen Dispersionen (I) und (II) miteinander vermischt,

mit der Maßgabe, daß das olefinisch ungesättigte polyfunktionelle Urethan (III) in die Partikeln (I), die Partikel (II) und/oder die kontinuierliche Phase eingearbeitet wird.

**17.** Verwendung der Dispersionen gemäß einem der Ansprüche 1 bis 15 als Beschichtungsstoffe, Klebstoffe oder Dichtungsmassen.

**18.** Verwendung nach Anspruch 17, **dadurch gekennzeichnet, daß** die Beschichtungsstoffe als Klarlacke und/oder als farb- und/oder effektgebende Beschichtungsstoffe für die Herstellung von Klarlackierungen, ein- und der mehrschichtiger, farb- und/oder effektgebender, elektrisch leitfähiger, magnetisch abschirmender und/oder fluoreszierender Beschichtungen und Kombinationseffektschichten verwendet werden.

**19.** Verwendung nach Anspruch 17 oder 18, **dadurch gekennzeichnet, daß** die Beschichtungsstoffe, Klebstoffe oder Dichtungsmassen auf den Gebieten der Kraftfahrzeugserienlackierung, der Kraftfahrzeugreparaturlackierung, der Beschichtung von Bauwerken im Innen- und Außenbereich, der Lackierung von Möbeln, Fenstern oder Türen und der industriellen Lackierung, inklusive Coil Coating, Container Coating, der Imprägnierung oder Beschichtung elektrotechnischer Bauteile und der Beschichtung von weißer Ware, inklusive Haushaltsgeräte, Heizkessel und Radiatoren, verwendet werden.

**Claims**

**1.** Aqueous dispersions curable thermally and with actinic radiation, comprising

(I) liquid, highly viscous and/or solid particles dimensionally stable under storage and application conditions, comprising

29

(IA) a binder free of carbon-carbon double bonds activatable with actinic radiation, comprising at least one (meth)acrylate copolymer (IA) containing on average at least one isocyanate-reactive functional group and at least one dispersive functional group, and
(IB) at least one blocked polyisocyanate;

(II) liquid, highly viscous and/or solid particles dimensionally stable under storage and application conditions, comprising at least one polyurethane (II) containing at least one isocyanate-reactive functional group, at least one functional group having at least one bond activatable with actinic radiation, and at least one dispersive functional group,
and
(III) at least one olefinically unsaturated constituent which is free of isocyanate-reactive functional groups and contains on average per molecule more than one carbon-carbon double bond activatable with actinic radiation.

2. Dispersions according to Claim 1, **characterized in that** the (meth)acrylate copolymers (IA) have a glass transition temperature Tg of from -40 to +70° Celsius.

3. Dispersions according to Claim 1 or 2, **characterized in that** the binder (IA) comprises

(IA1) at least one (meth)acrylate copolymer containing on average per molecule at least one isocyanate-reactive functional group and having a glass transition temperature Tg below room temperature, and
(IA2) at least one (meth)acrylate copolymer containing on average per molecule at least one isocyanate-reactive functional group and having a glass transition temperature Tg above room temperature.

4. Dispersions according to any of Claims 1 to 3, **characterized in that** the blocked polyisocyanate (IB) comprises at least one soft, flexibilizing segment in the molecule, which, as a constituent of three-dimensional polymeric networks, lowers their glass transition temperature Tg.

5. Dispersions according to Claim 4, **characterized in that** the soft, flexibilizing segment is selected from the group consisting of

(i) substituted or unsubstituted, linear or branched alkanediyl radicals having from 4 to 20 carbon atoms;
(ii) divalent polyester radicals comprising repeating polyester units of the formula $-(-CO-(CHR^1)_m-CH_2-O-)-$, in which the index m is from 4 to 6 and the substituent $R^1$ is hydrogen or an alkyl, cycloalkyl or alkoxy radical, no one substituent containing more than 12 carbon atoms;
(iii) divalent linear polyether radicals of the general formula $-(-O-(CHR^2)_o-)_pO-$, where the substituent $R^2$ is hydrogen or a lower, unsubstituted or substituted alkyl radical and the index o is from 2 to 6, and the index p is from 2 to 100;
(iv) linear divalent siloxane radicals,
(v) divalent hydrogenated polybutadiene and polyisoprene radicals;
(vi) divalent radicals of random or alternating butadiene-isoprene copolymers and butadiene-isoprene graft copolymers; and
(vii) divalent radicals of ethylene-propylene-diene copolymers.

6. Dispersions according to any of Claims 1 to 5, **characterized in that** the particles (II) contain blocked polyisocyanate groups.

7. Dispersions according to any of Claims 1 to 6, **characterized in that** the polyurethanes (II) are synthesized from

(IIA) at least one aliphatic polyisocyanate having an isocyanate functionality of from 2.0 to 6.0,
(IIB) at least one compound containing at least one isocyanate-reactive functional group and at least one bond activatable with actinic radiation,
(IIC) at least one low molecular mass aliphatic compound containing at least two isocyanate-reactive functional groups,
(IID) at least one compound containing at least one isocyanate-reactive functional group and at least one dispersive functional group,
(IIE) at least one neutralizing agent for the dispersive functional groups of the compound D), and, if desired
(IIG) at least one compound other than the compounds B) to E) and containing an isocyanate-reactive functional group.

8. Dispersions according to Claim 7, **characterized in that** the blocked isocyanate groups may be introduced into the polyurethanes (II)

  1. by adding at least one blocked polyisocyanate (IIH) before, during and/or after the preparation of the polyurethane (II), or
  2. by way of the reaction of at least one blocking agent (IIF) for isocyanate groups and/or at least one compound (IIF) containing at least one blocked isocyanate group and an isocyanate-reactive group with the isocyanate-containing polyurethane prepolymers resulting from the reaction of a stoichiometric excess of the compounds (IIA) with the compounds (IIB) and also, if appropriate, (IIC) and (IIG), and also with an amount of compounds (IID) and (IIE) that is sufficient for dispersibility in aqueous media.

9. Dispersions according to any of Claims 1 to 8, **characterized in that** the olefinically unsaturated constituent (III) comprises at least one hard segment in the molecule which, as a consituent of three-dimensional polymeric networks, raises their glass transition temperature.

10. Dispersions according to Claim 9, **characterized in that** the hardening segments are selected from the group consisting of divalent and higher multivalent aromatic and cycloaliphatic radicals.

11. Dispersions according to any of Claims 1 to 10, **characterized in that** the olefinically unsaturated constituent (III) is present in the particles (I), in the particles (II) and/or in the continuous phase of the dispersion.

12. Dispersions according to any of Claims 1 to 11, **characterized in that** the isocyanate-reactive groups are selected from the group consisting of hydroxyl groups, thiol groups and also primary and secondary amino groups.

13. Dispersions according to any of Claims 1 to 12, **characterized in that** the bonds activatable with actinic radiation are carbon-hydrogen single bonds or carbon-carbon, carbon-oxygen, carbon-nitrogen, carbon-phosphorus or carbon-silicon single bonds or double bonds.

14. Dispersions according to any of Claims 1 to 13, **characterized in that** the carbon-carbon double bonds are present in (meth)acryloyl, ethacryloyl, crotonate, cinnamate, vinyl ether, vinyl ester, ethenylarylene, dicyclopentadienyl, norbornenyl, isoprenyl, isopropenyl, allyl or butenyl groups; ethenylarylene ether, dicyclopentadienyl ether, norbornenyl ether, isoprenyl ether, isopropenyl ether, allyl ether or butenyl ether groups; ethenylarylene ester, dicyclopentadienyl ester, norbornenyl ester, isoprenyl ester, isopropenyl ester, allyl ester or butenyl ester groups.

15. Dispersions according to any of Claims 1 to 14, **characterized in that** the dispersive functional groups comprise (potentially) anionic groups selected from the group consisting of carboxylic acid, sulfonic acid and phosphonic acid groups.

16. Process for preparing aqueous dispersions curable thermally and with actinic radiation, according to any of Claims 1 to 15, **characterized in that**

  (1) at least one aqueous dispersion (I) comprising at least one kind of particles (I) is prepared,
  (2) at least one aqueous dispersion (II) comprising at least one kind of particles (II) is prepared, and
  (3) the aqueous dispersions (I) and (II) are mixed with one another,

  with the proviso that the olefinically unsaturated polyfunctional urethane (III) is incorporated into the particles (I), into the particles (II) and/or into the continuous phase.

17. Use of the dispersions according to any of Claims 1 to 15 as coating materials, adhesives or sealing compounds.

18. Use according to Claim 17, **characterized in that** the coating materials are used as clearcoat materials and/or as color and/or effect coating materials for producing clearcoats, single-coat and/or multicoat, color and/or effect, electrically conductive, magnetically shielding and/or fluorescent coatings and combination effect coats.

19. Use according to Claim 17 or 18, **characterized in that** the coating materials, adhesives or sealing compounds are used in the fields of automotive OEM finishing, automotive refinish, the coating of buildings, inside and out, the coating of furniture, windows or doors, and industrial coating, including coil coating, container coating, the impregnation or coating of electrical components, and the coating of white goods, including domestic appliances, boilers and radiators.

**Revendications**

1. Dispersions aqueuses durcissables thermiquement et par un rayonnement actinique, contenant

   (I) des particules liquides, très visqueuses et/ou solides à stabilité dimensionnelle dans les conditions de stockage et d'utilisation, contenant

   (I A) un liant qui est exempt de doubles liaisons carbone-carbone qui sont activables par un rayonnement actinique, contenant au moins un copolymère de (méth)acrylate (I A) comportant en moyenne statistique au moins un groupe fonctionnel réactif avec un isocyanate et au moins un groupe fonctionnel dispersant, et (I B) au moins un polyisocyanate bloqué ;

   (II) des particules liquides, très visqueuses et/ou solides à stabilité dimensionnelle dans les conditions de stockage et d'utilisation, contenant au moins un polyuréthanne (II) comportant au moins un groupe fonctionnel réactif avec un isocyanate, au moins un groupe fonctionnel comportant au moins une liaison activable par un rayonnement actinique, ainsi qu'au moins un groupe fonctionnel dispersant,
   ainsi que
   (III) au moins un composant à insaturation oléfinique, qui est exempt de groupes fonctionnels réactifs avec un isocyanate et comporte en moyenne statistique dans la molécule plus d'une double liaison carbone-carbone activable par un rayonnement actinique

2. Dispersions selon la revendication 1, **caractérisées en ce que** les copolymères de (méth)acrylate (I A) ont une température de transition vitreuse Tg de -40 à +70 °C.

3. Dispersions selon la revendication 1 ou 2, **caractérisées en ce que** le liant (I A) contient

   (I A 1) au moins un copolymère de (méth)acrylate comportant en moyenne statistique dans la molécule au moins un groupe fonctionnel réactif avec un isocyanate, et ayant une température de transition vitreuse Tg inférieure à la température ambiante.
   (I A 2) au moins un copolymère de (méth)acrylate comportant en moyenne statistique dans la molécule au moins un groupe fonctionnel réactif avec un isocyanate, et ayant une température de transition vitreuse Tg supérieure à la température ambiante.

4. Dispersions selon l'une quelconque des revendications 1 à 3, **caractérisées en ce que** le polyisocyanate bloqué (I B) contient dans la molécule au moins un segment souple, flexibilisant, qui, en tant que composant de réseaux polymères tridimensionnels, abaisse leur température de transition vitreuse $T_g$.

5. Dispersions selon la revendication 4, **caractérisées en ce que** le segment souple, flexibilisant, est choisi dans l'ensemble constitué par

   (i) des radicaux alcanediyle linéaires ou ramifiés, substitués ou non substitués, ayant de 4 à 20 atomes de carbone ;
   (ii) des radicaux polyester à deux liaisons, à motifs répétitifs polyester de formule - (-C (O) - $(CHR^1)_m$-$CH_2$-O-) -, dans lesquels l'indice m va de 4 à 6 et le substituant $R^1$ représente un atome d'hydrogène, un radical alkyle, cycloalkyle ou alcoxy, aucun substituant ne contenant plus de 12 atomes de carbone,
   (iii) des radicaux polyéther linéaires à deux liaisons, de formule générale - (-O- $(CHR^2)o$-$)_p$ O-, le substituant $R^2$ étant un atome d'hydrogène ou un radical alkyle inférieur, éventuellement substitué, et l'indice o = 2 à 6, et l'indice p = 2 à 100 ;
   (iv) des radicaux siloxane linéaires à deux liaisons,
   (v) des radicaux polybutadiène et polyisoprène hydrogénés à deux liaisons ;
   (vi) des restes à deux liaisons de copolymères butadiène/isoprène et copolymères greffés butadiène/isoprène, statistiques ou alternes, ainsi que
   (vii) des restes à deux liaisons de copolymères éthylène/propylène/diène.

6. Dispersions selon l'une quelconque des revendications 1 à 5, **caractérisées en ce que** les particules (II) contiennent des groupes polyisocyanate bloqués.

7. Dispersions selon l'une quelconque des revendications 1 à 6, **caractérisées en ce que** les polyuréthannes (II) sont constitués de

(II A) au moins un polyisocyanate aliphatique ayant une fonctionnalité isocyanate de 2,0 à 6,0,
(II B) au moins un composé comportant au moins un groupe fonctionnel réactif avec un isocyanate, ainsi qu'au moins une liaison activable par un rayonnement actinique,
(II C) au moins un composé aliphatique de faible masse moléculaire, comportant au moins deux groupes fonctionnels réactifs avec un isocyanate,
(II D) au moins un composé comportant au moins un groupe fonctionnel réactif avec un isocyanate et au moins un groupe fonctionnel dispersant,
(II E) au moins un agent de neutralisation pour les groupes fonctionnels dispersants du composé D) ainsi qu'éventuellement
(II G) au moins un composé différent des composés B) à E), comportant un groupe fonctionnel réactif avec un isocyanate.

8. Dispersions selon la revendication 7, **caractérisées en ce que** les groupes isocyanate bloqués peuvent être introduits dans les polyuréthannes (II)

1. par addition d'au moins un polyisocyanate bloqué (II H) avant, pendant et/ou après la préparation du polyuréthanne (II) ou
2. par la mise en réaction d'au moins un agent bloquant (II F) pour groupes isocyanate et/ou d'au moins un composé (II F) comportant au moins un groupe isocyanate bloqué et un groupe réactif avec un isocyanate, avec les prépolymères polyuréthanne contenant des groupes isocyanate, qui résultent de la réaction d'un excès stoechiométrique des composés (II A) avec les composés (II B) ainsi qu'éventuellement (II C) et (II G) ainsi qu'avec une quantité, suffisante pour la dispersibilité dans des milieux aqueux, des composés (II D) et (II E).

9. Dispersions selon l'une quelconque des revendications 1 à 8, **caractérisées en ce que** le composant à insaturation oléfinique (III) contient dans la molécule au moins un segment rigide qui, en tant que composant de réseaux polymères tridimensionnels, élève leur température de transition vitreuse.

10. Dispersions selon la revendication 9, **caractérisées en ce que** les segments rendant rigide sont choisis dans l'ensemble constitué par des radicaux cycloaliphatiques et des radicaux aromatiques à deux ou trois liaisons.

11. Dispersions selon l'une quelconque des revendications 1 à 10, **caractérisées en ce que** le composant à insaturation oléfinique (III) se trouve dans les particules (I), les particules (II) et/ou la phase continue des dispersions.

12. Dispersions selon l'une quelconque des revendications 1 à 11, **caractérisées en ce que** les groupes réactifs avec un isocyanate sont choisis dans l'ensemble constitué par les groupes hydroxy, thiol ainsi qu'amino primaires et secondaires.

13. Dispersions selon l'une quelconque des revendications 1 à 12, **caractérisées en ce qu'**on utilise en tant que liaisons activables par un rayonnement actinique des simples liaisons carbone-hydrogène ou des simples liaisons ou des doubles liaisons carbone-carbone, carbone-oxygène, carbone-azote, carbone-phosphore ou carbone-silicium.

14. Dispersions selon l'une quelconque des revendications 1 à 13, **caractérisées en ce que** les doubles liaisons carbone-carbone sont présentes dans des groupes (méth)acryloyle, éthacryloyle, crotonate, cinnamate, éther vinylique, ester vinylique, éthénylarylène, dicyclopentadiényle, norbornényle, isoprényle, isopropényle, allyle ou butényle ; des groupes éther éthénylarylénique, dicyclopentadiénylique, norbornénylique, isoprénylique, isopropénylique, allylique ou buténylique, ou des groupes ester éthénylarylénique, dicyclopentadiénylique, norbornénylique, isoprénylique, isopropénylique, allylique ou buténylique.

15. Dispersions selon l'une quelconque des revendications 1 à 14, **caractérisées en ce que** les groupes fonctionnels dispersants consistent en des groupes (potentiellement) anioniques, choisis dans l'ensemble constitué par les groupes carboxy, sulfo et phosphono.

16. Procédé pour la préparation de dispersions aqueuses durcissables thermiquement et par un rayonnement actinique selon l'une quelconque des revendications 1 à 15, **caractérisé en ce que**

(1) on prépare au moins une dispersion aqueuse (I), contenant au moins un type de particules (I),
(2) on prépare au moins une dispersion aqueuse (II), contenant au moins un type de particules (II) et
(3) on mélange entre elles les dispersions aqueuses (I) et (II),

étant entendu que l'uréthanne (III) polyfonctionnel à insaturation oléfinique est incorporé dans les particules (I), les particules (II) et/ou la phase continue.

17. Utilisation des dispersions selon l'une quelconque des revendications 1 à 15, en tant que matières de revêtement, adhésifs ou matériaux d'étanchéité.

18. Utilisation selon la revendication 17, **caractérisée en ce que** les matières de revêtement sont utilisées en tant que vernis et/ou en tant que matières de revêtement colorantes et/ou à effet pour la production de revêtements de vernis, de revêtements mono- ou multicouches, colorants et/ou à effet, conducteurs de l'électricité, antimagnétiques et/ou fluorescents et de couches à effets combinés.

19. Utilisation selon la revendication 17 ou 18, **caractérisée en ce que** les matières de revêtement, adhésifs ou matériaux d'étanchéité sont utilisés dans les domaines de la mise en peinture de véhicules automobiles, du peinturage de réparation de véhicules automobiles, du revêtement de bâtiments à l'extérieur et à l'intérieur, du peinturage de meubles, de fenêtres et de portes et du peinturage industriel, y compris le peinturage de rubans continus *coil coating,* le peinturage de récipients *container coating,* l'imprégnation ou le revêtement de composants électrotechniques et le revêtements d'appareils, y compris d'appareils ménagers, de chaudières de chauffage et de radiateurs.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19818735 A1
- WO 9840170 A
- DE 19908013 A1
- DE 19908018 A1
- DE 19920799 A1
- EP 0928800 A1
- DE 19920801 A1
- DE 19947054
- DE 3807571 A1
- DE 3706095 A1
- EP 0358153 B1
- US 4754014 A1
- DE 4421823 A1
- WO 9222615 A
- DE 19628142 A1
- DE 1071241 B1
- EP 0498583 A1
- DE 19828742 A1
- DE 19617086 A1
- DE 19631269 A1
- EP 0004571 A1
- EP 0582051 A1
- US 4444954 A
- WO 9749745 A
- WO 9749747 A
- CA 2163591 A
- US 4419513 A
- US 4454317 A
- EP 0646608 A
- US 4801675 A
- EP 0183976 A1
- DE 4015155 A1
- EP 0303150 A1
- EP 0496208 A1
- EP 0524500 A1
- EP 0566037 A1
- US 5258482 A1
- US 5290902 A1
- EP 0649806 A1
- DE 4229183 A1
- EP 0531820 A1
- DE 10005228
- DE 19828935 A1
- EP 0922720 A1
- EP 1013690 A1
- EP 1029879 A1
- DE 19609617 A1
- US 5972189 A

- DE 19540977 A1
- DE 19518392 A1
- DE 19613547 A
- DE 19618657 A1
- DE 19652813 A1
- DE 19814471 A
- DE 19841842 A1
- DE 19841408 A1
- DE 19914896 A1
- EP 0089497 A
- EP 0204161 A1
- DE 3636183 A1
- DE 3636156 A1
- DE 3718446 A1
- DE 3719804 A1
- DE 3930601 A1
- EP 0068311 A1
- EP 0264843 A1
- EP 0265820 A1
- EP 0283852 A1
- EP 0293746 A1
- EP 0417567 A1
- US 4828826 A
- US 5244649 A
- US 4710542 A
- EP 0245700 A1
- EP 0299420 A1
- DE 2214650 B1
- DE 2749576 B1
- US 4091048 A
- US 3781379 A
- DE 10041635
- US 4939213 A
- US 5084541 A
- US 5288865 A
- EP 0604922 A
- DE 19736535 A1
- DE 4009858 A1
- DE 4437535 A1
- EP 0521928 A1
- EP 0522420 A1
- EP 0522419 A1
- EP 0730613 A1
- DE 19809643 A1
- DE 19840605 A1
- DE 19805421 A1
- DE 19860041 A1

**In der Beschreibung aufgeführte Nicht-Patentliteratur**

- Römpp Lexikon Lacke und Druckfarben. Georg Thieme Verlag, 1998, 49-51
- Römpp Lexikon Lacke und Druckfarben. Georg Thieme Verlag, 1998, 190
- Ergänzend wird auf Römpp Lexikon Lacke und Druckfarben. Georg Thieme Verlag, 1998, 605, 606
- Römpp Lexikon Lacke und Druckfarben. Georg Thieme Verlag, 1998, 598, 605, 606
- **Dieter Stoye ; Werner Freitag.** Paints, Coatings and Solvents. Wiley-VCH, 1998, 327-349
- **von K. Kataoka.** *Chemical Engineering Science,* 1995, vol. 50, 1409-1416
- Römpp Lexikon Lacke und Druckfarben. Georg Thieme Verlag, 1998, 274-276
- Ergänzend wird auf Römpp Lexikon Lacke und Druckfarben. Georg Thieme Verlag, 1998, 176
- Römpp Lexikon Lacke und Druckfarben. Georg Thieme Verlag, 1998, 180, 181
- Polyacrlynitril. Ergänzend wird auf Römpp Lexikon Lacke und Druckfarben. Georg Thieme Verlag, 1998, 250 ff
- Römpp Lexikon Lacke und Druckfarben. Georg Thieme Verlag, 1998, 29
- **von Johan Bieleman.** Lackadditive. Wiley-VCH, 1998, 242 ff
- Paints, Coatings and Solvents. Wiley-VCH, 1998, 80 ff
- **von B. Singh ; Mitarbeiter.** Carbamylmethylated Melamines, Novel Crosslinkers for the Coatings Industry. *Advanced Organic Coatings Science and Technology Series,* 1991, vol. 13, 193-203
- Römpp Lexikon Lacke und Druckfarben. 1998, 491
- **von Johan Bieleman.** Lackadditive. Wiley-VCH, 1998
- **von Johan Bielemann.** Lackadditive. Wiley-VCH, 1998, 31-65
- Lexikon Lacke und Druckfarben. Georg Thieme Verlag, 1998, 391